Europäisches Patentamt

**European Patent Office**

Office européen des brevets

(19)

(11) **EP 1 515 100 A1**

(12) **EUROPEAN PATENT APPLICATION**
published in accordance with Art. 158(3) EPC

(43) Date of publication:
**16.03.2005 Bulletin 2005/11**

(51) Int Cl.7: **F24F 7/06**, **B25J 9/06**

(21) Application number: **03730691.7**

(22) Date of filing: **29.05.2003**

(86) International application number:
**PCT/JP2003/006734**

(87) International publication number:
**WO 2003/102475 (11.12.2003 Gazette 2003/50)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **03.06.2002 JP 2002162089**
**04.06.2002 JP 2002163328**
**07.06.2002 JP 2002167555**

(71) Applicant: **SANKYO SEIKI MFG. CO. LTD.**
**Suwa-gun, Nagano-ken 393-8511 (JP)**

(72) Inventors:
• **TSUNETA, Haruhiro**
**c/o Sankyo Seiki MFG. Co., Ltd.**
**Ina-shi, Nagano 396-8511 (JP)**

• **KOIKE, Kazuhide**
**c/o Sankyo Seiki MFG. Co., Ltd.**
**Ina-shi, Nagano 396-8511 (JP)**
• **SHIMURA, Yoshiki**
**c/o Sankyo Seiki MFG. Co., Ltd.**
**Ina-shi, Nagano 396-8511 (JP)**
• **SATO, Shiro c/o Sankyo Seiki MFG. Co., Ltd.**
**Ina-shi, Nagano 396-8511 (JP)**
• **YASUKAWA, Kazuyoshi**
**c/o Sankyo Seiki MFG. Co., Ltd**
**Ina-shi, Nagano 396-8511 (JP)**

(74) Representative: **Klinghardt, Jürgen**
**Eisenführ, Speiser & Partner,**
**Zippelhaus 5**
**20457 Hamburg (DE)**

(54) **CLEAN ASSEMBLING MODULE DEVICE, PRODUCTION SYSTEM FORMED WITH THE MODULE, INDUSTRIAL ROBOT, AND POLLUTION SPRED PREVENTION SYSTEM**

(57) A clean assembling module device that achieves cleanliness of a work area where assembling, processing, transportation, etc. of a work item are performed and that can be downsized. The invention also includes a production system, an industrial robot, and a pollution spread prevention system that are formed with the device. A clean assembling module device is provided with clean air generation means on the top of the device and is formed so as to have a work area, a clean air retaining/exhausting area and a mechanism section area, in that order from the top side of the device. The outer periphery of the work area is shielded by a clean area shielding wall. Fluid resistance between the work area and the clean air retaining/exhausting area is controlled by a partition wall having small holes. Air came through the work area and the clean air retaining/exhausting area is exhausted by an air exhausting fan to outside the device. The work area is positively pressurized, and the mechanism section area is negatively pressurized relative to the work area. Pressure in the clean air retaining/exhausting area is adjusted by the small holes of the partition wall and by rotation speed of the air exhausting fan so as to be intermediate between the pressure in the work area and the pressure in the mechanism section area.

Fig. 1

**Description**

CROSS-REFERENCE TO RELATED APPLICATIONS

This application claims priority of International Application No. PCT/JP03/06734, filed May 29, 2003 and Japanese Application No. 2002-162089, filed June 3, 2002, Japanese Application No. 2002-163328, filed June 4, 2002, and Japanese Application No. 2002-167555, filed June 7, 2002, the complete disclosures of which are hereby incorporated by reference.

BACKGROUND OF THE INVENTION

a) Technical Term

A "clean assembling module device" in the present specification means an assembling device which is constructed to perform either one or a plurality of various operations such as assembling, working, cleaning, carrying or the like of a work and having a working area maintained in a clean state for performing the operation described above, and also means a device which can be used as a constitutional unit constructing an assembling-and-working line to perform assembling and working of a product or a component under a clean environment.

b) Field of the Invention

The present invention relates to a clean assembling module device, a production system constructed by using it, an industrial robot and a contamination propagation preventing system. More specifically, the present invention relates to an improvement of a structure for ensuring the cleanliness of the clean assembling module device performing the operation on a work under a cleanliness environment, an improvement of a structure of the industrial robot performing an operation such as assembling, working, carrying or the like of a work in the clean assembling module device or the like, and an improvement of the contamination propagation preventing system in a production system which realizes a series of clean production processes by means of forming a clean area by connecting the clean assembling module devices with a tube shaped connection passage.

DESCRIPTION OF THE RELEVANT ART

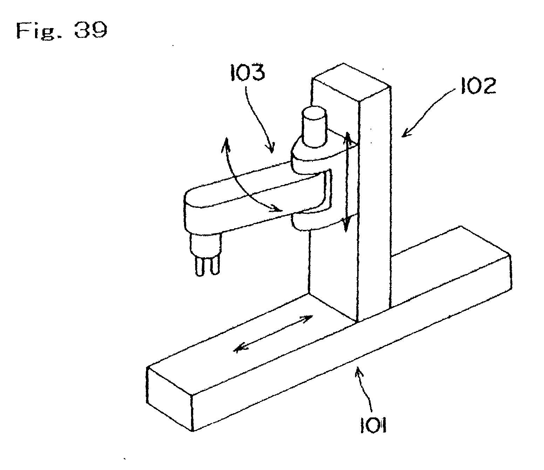

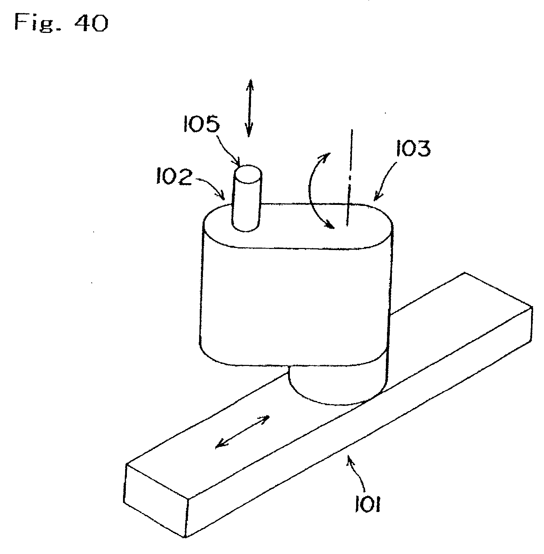

A clean assembling module device has been used to perform an operation such as assembling, working, carrying or the like of a work under a clean environment. For example, the clean assembling module device is shielded from the outside of the device by means of being covered with a shielding wall which is, for example, an exterior wall and furthermore being performed with a sealing, and is constructed such that a clean air through a filter is sent to keep the inside of the device, especially the atmosphere of working area in a cleanliness state.
Further, a production system has been utilized in which a plurality of the clean assembling module devices are connected each other and processes for a work are successively performed in the respective module devices in an assembly line manner. For example, the production system constructed by a plurality of the clean assembling module devices connected with a connection passage provides superior features such as a small size and a high degree of freedom.
However, in the production system constructed by connecting a plurality of the clean assembling module devices, when contamination occurs in certain clean assembling module device for some reason, the contamination may be propagated to another clean assembling module device connected to it without the contamination being remained within the concerned clean assembling module device.
When the working area in the clean assembling module device is connected to another working area in another module, the connection passage is formed to be with a diameter as small as possible. However, since the ratio with respect to the space of the working area is considerably large, it is necessary to ensure the cleanliness in the connection passage as well as the working area.
In view of the above, it is an object of the present invention to provide a clean assembling module device capable of ensuring a cleanliness in a working area for performing assembling, working, carrying or the like of a work and to provide a production system constructed by using it.
Next, the technical background of the small industrial robot will be described below which is used in the working area in the clean assembling module device described above.
There are various types of robots such as an orthogonal type, a scalar type and a vertical multi-joint type for small industrial robots that perform operations such as assembling, working, carrying or the like of a work. Among them, there is a robot having a structure referred to as a modified cylindrical type. The structure of the modified cylindrical type robot is, for example, as follows: ① a slide mechanism 101, a lifting and lowering mechanism 102 and an arm turning mechanism 103 are provided, which are operated to perform sliding, lifting or lowering, and turning in this order to position the tip end of an arm (see Fig. 39), and ② operations of sliding, turning, and lifting or lowering are performed in this order for performing positioning (see Fig. 40).

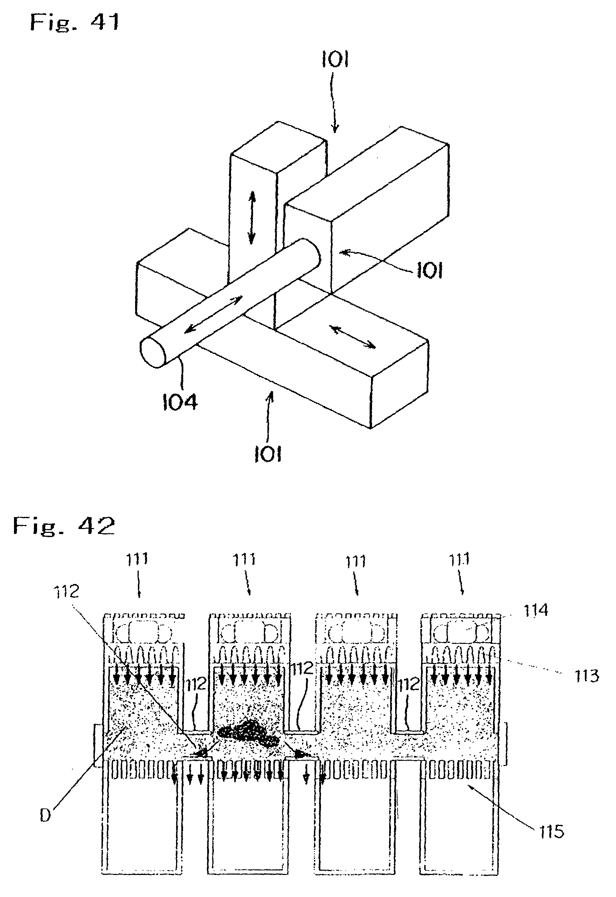

When the small industrial robot as described above is used in a clean assembling module device, the construction that only the tool end of the robot is entered into the clean working area, which is managed and maintained under a controlled environment, has been known, for example, as follows: ③ an orthogonal type robot as shown in Fig. 41 is used and a shaft 104 (vertical shaft or front-and-rear shaft) that is the nearest to the tool end is entered in the working area, and ④ a tool end 105 is entered in the working area by using the above-mentioned type ② .

However, in the robots such as the types ① , ② and ③ as shown in the drawings, when respective mechanisms 101 through 103 are successively disposed in series, imbalance of weight to the bearing part which is a weak point of the mechanism occurs and a heavy load is liable to impose on the bearing and the like during operation. Alternatively, vibration occurs to cause to reduce rigidity and accuracy. In addition, in the case of the type ① , it is difficult to construct that only the tool end portion is entered into the closed working area. Further, in the case of the types ② and ③ , the tool end portion (shaft 104, tool end 105) is two-dimensionally operated and capable of moving freely and widely in a flat plane. However, when a high degree of freedom of operation is attempted to ensure, a wide passing hole is required to be formed, and when a partition is formed to correspond to the passing hole, there occurs a problem that downsizing and cost reduction of the device may not be attained. Moreover, a joint type robot such as a scalar type may often occur an interference with joints for downsizing and thus it is difficult that the structure of hand part is relatively made smaller.

OBJECT OF THE INVENTION

Therefore, it is a primary object of the present invention to provide an industrial robot which is capable of ensuring a high degree of rigidity and operational accuracy and suitable for downsizing.
In addition, a production system is used to realize a series of clean manufacturing processes in which the above mentioned clean assembling module devices are connected by a tubular connection passage to form a clean area "D" (see Fig. 42). The production system is constructed such that the clean assembling module devices 111 are continuously connected to an adjacent clean assembling module device 111 by a connection passage 112 and a work is consecutively carried to perform working or the like in the clean area "D". The clean area "D" is cleanly maintained by the structure that, for example, clean air passing through a filter 113 is flowed down by a fan 114 at the upper portion of the clean assembling module and passed on the lower side through small holes of a partition wall 115 disposed at the lower part of the clean area "D".
The production system has superior features that its miniaturization is possible and a high degree of design flexibility can be realized. However, the clean assembling module devices 111 are constructed so as to be consecutively connected and the respective clean area capacities are small. Therefore, when contamination occurs in the dean area "D" for some reason, the contamination does not remain at the concerned clean assembling module device 111 but is propagated to the respective connected clean assembling module devices 111 (see Fig. 42). The problem on the propagation of contamination is especially more serious in the so-called miniaturized desktop type production system because the distance between the devices is small.
In view of the above, it is another object of the present invention to provide a contamination propagation preventing system capable of efficiently and surely preventing contamination propagation when unexpected contamination has occurred in the clean region especially in the small-sized production system.

SUMMARY OF THE INVENTION

In order to achieve the objects described above, the present inventors have examined in various ways and, as a result, have found a construction, which is difficult for dust to enter into the working area and capable of immediately exhausting the dust from the working area even when the dust has entered, as a construction which is preferable to keep the working area in a clean condition in a single clean assembling module device. In addition, the present inventors have found a connecting construction suitable to ensure cleanliness in the working area when the clean assembling module devices are connected to each other.
The present inventions have executed based on the knowledge described above. The present invention is characterized in that, in a clean assembling module device performing an operation with respect to a work, the clean assembling module device is provided with a clean air generating means at the upper part of the device and is constructed so as to include a working area, a clean air retaining and exhausting area, and a mechanism section area from the upper part side of the device, the outer periphery of the working area being covered with a clean region shielding wall, the flow-resistance in the working area and the clean air retaining and exhausting area being controlled by a partition wall having a plurality of small holes, the mechanism section area being provided with an exhaust fan to exhaust the air flowing through the working area and the clean air retaining and exhausting area to the outside of the device, the working area being controlled at a positive pressure by the clean air generating means and the mechanism section area being depressurized with respect to the working area, and the pressure of the clean air retaining and exhausting area being adjusted by means of the small holes of the partition wall and the rotational speed of the exhaust fan so as to be a middle pressure between the pressure in the working area and that in the mechanism section area.

In the clean assembling module device, the partition wall having the plurality of small holes acts as flow resistance and a part of the clean air which is generated from the clean air generating means and flows into the working area is interrupted and retained in the working area. Therefore, the internal pressure of the working area (furthermore, the pressure in the clean air retaining and exhausting area) is in a positive pressure condition which is higher than that in the mechanism section area or the outside of the device and thus air with low cleanliness, i.e., air with much dust: is prevented from flowing from the outside and the cleanliness in the working area is maintained. Moreover, the dust entered into the working area or the dust having occurred in the working area can be exhausted on the mechanism section area side from the small holes of the partition wall. Further, in the clean assembling module device, especially the open area ratio of the small holes in the partition wall and the rotational speed of the fan of the clean air generating means become major factors to determine the pressure in the working area. Therefore, it can be controlled such that the working area becomes at a positive pressure in a proper range and the clean air is flown from the clean air generating means side to the mechanism section area side by appropriately adjusting them.

Further, in the case of the clean assembling module device having the construction described above, it is preferable that the pressure in the working area and the flow rate of the clean air are independently controllable. For example, in the module where the occurrence of contamination is predicted, it is important from a point of view of preventing the contamination propagation that the pressure in the non-connection state is set to be lower than those in other modules. However, in the module having a high possibility of occurring the contamination, it is preferable to increase the flow rate of clean air for attaining the cleanliness.

Further, in the working area of the clean assembling module device, a working mechanism is preferably installed to perform an operation such as assembling, working or carrying of the work. In this case, the operation such as assembling, working, or carrying of the work can be performed by means of the working mechanism installed in the working area while maintaining the cleanliness in the working area.

The working mechanism is preferably constructed as a mechanism such that its one part enters into the mechanism section area by penetrating through the clean air retaining and exhausting area. In this case, the portion where dust may easily occur can be arranged on the outside of the working area such that the mechanism, the drive source and the like which are required for driving are arranged in the mechanism section area while only the mechanism required for carrying and the like is arranged in the working area. Therefore, the operation can be performed while maintaining the cleanliness in the working area.

In addition, an assembling module device clean in accordance with the present invention preferably includes a carrier means for carrying in and carrying out the work which penetrates through the clean region shielding wall, and the working area is provided with a penetration part through which the carrier means penetrates for allowing connection with the outside. In this case, the work can be carried in from the penetration part on one side to the working area, and carried out from the penetration part on the other side by means of the carrier means penetrating through the clean region shielding wall.

When two or more penetration parts are installed, two of them are preferably installed such that a work is carried within the clean assembling module device in a linear manner. In this case, when a linear carrier means is arranged so as to be formed from one of two penetration parts to the other, a work (especially, a main work as a base portion to which various component parts are attached) can be linearly carried.

The working area includes a door for maintenance, and the door is preferably constructed such that a plurality of aperture areas can be selected corresponding to the contents of maintenance. In this case, for example, immediate dealing and handling are possible when the situation has occurred that a work carrier pallet or a working mechanism has discontinued in the clean assembling module device. Moreover, since the door is constructed such that a plurality of aperture areas can be selected corresponding to the contents of maintenance, it is preferable in the point that operations can be performed more easily and, in addition, that the situation can be prevented in which dust enters into the working area by opening the aperture part in needlessly wide.

Further, the production system in accordance with the present invention is characterized in that the production system includes a plurality of the clean assembling module devices, the clean assembling module device being connected to another clean assembling module device by connecting the penetration parts such that a work can be carried in or carried out by a carrier means, and the connection being performed by means of that a U-shaped seal member is fitted to the flange parts of the penetration parts to seal between the penetration parts. In this case, the clean assembling module devices can be connected by connecting the penetration parts, which are capable of connecting to the outside, to organize a production system for performing the operations such as assembling or the like of the work.

Moreover, since the U-shaped seal member is fitted to the flange parts of the penetration parts and seals between the penetration parts, the cleanliness of the inside of the respective connected clean assembling module devices, especially the cleanliness in the working area, can be secured after the production system has been organized.

Further, the production system in accordance with the present invention is characterized in that the production system includes a plurality of the clean assembling module devices, and the clean assembling module device being connected to another clean assembling module device by connecting the penetration part and a tunnel accommodating a carrier means such that a work can be carried in or carried out by a carrier means, and the connection is performed by means of that the U-shaped seal member is fitted to the flange part of the penetration part and the tunnel to seal between the penetration part and the tunnel. In this case, the clean assembling module devices can be connected by connecting the penetration parts, which are capable of connecting to the outside, through the tunnel to organize the production system for performing the operations such as assembling or the like of the work. Moreover, since the U-shaped seal member is fitted to the flange part of the penetration part and the end portion of the tunnel and seals therebetween, the cleanliness of the inside of the respective connected clean assembling module devices, especially the cleanliness in the working area, can be secured after the production system has been organized.

Further, in the production system of the present invention, a gel-like sealing material is preferably coated between the U-shaped seal member and the flange part of the penetration part. Thereby, the sealing is further assured and air can be prevented from leaking out from the clearance of the connecting portion.

In the production system of the present invention, the U-shaped seal member is preferably fitted such that the open part of the "U" shape faces in the downward direction. In this case, since the open part faces downward, dust is difficult to enter into the working area from the open part.

Moreover, in order to achieve the above-mentioned object with regard to an industrial robot, the present invention is characterized in that, in the industrial robot having a horizontal sliding mechanism, an upper and lower lifting mechanism and an arm turning mechanism for performing assembling, working or the like for a work, the upper and lower lifting mechanism includes a shaft, a shaft guide part supporting the shaft, and an upper and lower lifting drive device which moves the shaft up and down, and the arm turning mechanism includes a turning arm and a turning drive device for turning the turning arm, the turning arm is disposed on an upper side of the shaft guide part, and the horizontal sliding mechanism and the upper and lower lifting drive device are disposed on a lower side of the shaft guide part to keep the weight balance to the shaft guide part.

In this case, the arrangement balance of the upper part and the lower part with respect to the shaft guide part is improved and the weight distribution is equalized in the axial direction of the shaft. Therefore, the deflection of the moment and the inertia acting on the shaft during the horizontal sliding is eliminated and equalized and the rigidity increases and the operational accuracy improves. Further, the vibration during operation is restrained and the accuracy improves.

In the industrial robot of the present invention, a partition wall is preferably provided at an upper position of the turning drive device and the shaft guide part and at a lower position of the turning arm for maintaining the working environment such as assembling, working or the like to the work. In this case, the arrangement balance with respect to the shaft guide part is maintained. Also, the work can be carried within an elliptical wide range by means of that the shaft is linearly moved and the turning arm at its upper end is turned. In this case, the slit provided in the partition wall for penetrating the shaft can be formed in a simple shape like a straight line shape. In addition, since the partition wall is provided at the upper position of the turning drive device and the shaft guide part and at the lower position of the turning arm for maintaining the working environment such as assembling, working or the like to the work, the working area partitioned by the partition wall is easily maintained in a clean state.

Preferably, the partition wall includes a first partition wall having a slit hole so that the industrial robot is capable of sliding in the horizontal direction and a second partition wall having a through-hole for the shaft. In this case, the aperture part of the slit can be closed by means of that the second partition wall superposed on the first partition wall is applied to the slit hole of the first partition wall.

Moreover, the industrial robot of the present invention is preferably provided with a rotation shaft at the arm end of the turning arm for rotating the work or performing rotational operations for the work. In this case, the work can be freely carried or the like within an elliptical range by combining turning operation of the turning arm and linearly moving operation of the shaft supporting the turning arm. Moreover, since the industrial robot described above is not required to form a multi-joint construction like a conventional joint type robot arm, the interference between the joints is not necessary to be considered and thus downsizing is easily attained.

A plurality of turning arms are preferably adopted. In this case, a plurality of works are simultaneously carried or the like by the respective turning arms.

The mounting face for mounting the industrial robot is preferably formed in the parallel direction to the axial direction of the shaft. When the industrial robot is used, for example, in the clean assembling module device, the flow-resistance of down flow can be restrained low by mounting the robot on the wall face.

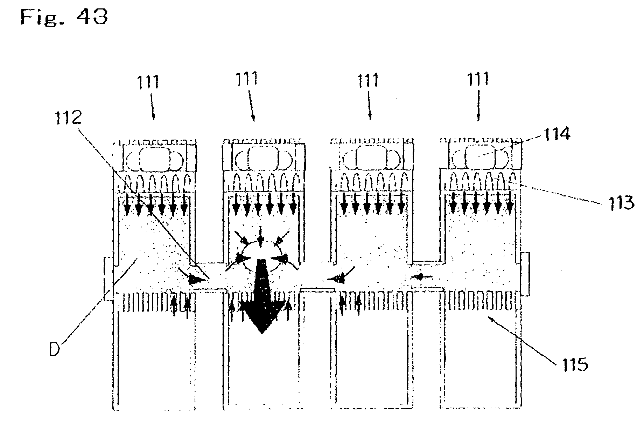

Moreover, in order to achieve the object described above to a contamination propagation preventing system, the present inventors have examined in various ways about conventional various means. For example, in the production system as shown in Figs. 42 and 43, there are two cases that the propagation of contamination is assumed as follows:

A. the case that contamination occurs in one of a plurality of modules which are connected each other (Fig. 42).
B. the case that the pressure and the flow of clean air are disturbed because internal clean region in one of the modules connected is connected to outside air (Fig. 43).

Further, there is another case as follows:

C. the case that generation of clean air flow has stopped by some reasons such as stopping of a fan (hereinafter, referred to as "contamination" for the case "A", "damage" for the case "B" and "stoppage" for the case "C").

Optimal actions to the above-mentioned "contamination", "damage", and "stoppage" are considered to be somewhat different, but the following measures should be executed as basic action.

① Detection or prediction of contamination, damage and stoppage.
② Prevention of contamination propagation.
③ Marking on the work having a possibility of contamination.
④ Protection for a non-contaminated work.
⑤ Recovery of contamination, damage and stoppage.
⑥ Restart of normal production.

The present inventors have examined in various ways to realize above-mentioned various actions and measures and, as a result, have found a system suitable to prevent the propagation of contamination when contamination has occurred in a production system. The present invention has executed based on the knowledge described above and is characterized in that, in a contamination propagation preventing system in a production system in which a plurality of clean assembling module devices for performing prescribed manufacturing processes such as assembling, working and the like to a work are connected with a tubular connection passage to form a clean region and realize a series of clean manufacturing processes, at least either one of a contamination occurrence detecting means for detecting contamination occurred in the clean region of the inside of the system and a contamination occurrence prediction means for predicting the occurrence of contamination, and a contamination propagation prediction means for predicting the propagation of the contamination having occurred to another clean assembling module device, and a contamination propagation preventing means for preventing the propagation of the contamination having occurred to another clean assembling module device are provided in the clean assembling module device or the connection passage.

According to the contamination propagation preventing system, when contamination has occurred in the clean region, the contamination can be detected or the contamination occurrence can be predicted. In addition, the situation that the contamination having occurred propagates to another clean assembling module device can be predicted and prevented. The detection of contamination can be performed, for example, by monitoring air within the production system with a particle counter or the like or by counting the particles subsided on an image pick-up device.

The contamination occurrence prediction means is preferably a means predicting the occurrence of contamination based on the information of the flow rate and the flow direction of air in the connection passage. For example, when the flow rate and the flow direction of air have rapidly varied, contamination occurrence can be predicted by judging, for example, that a door is opened and outside air is flown into either of the clean assembling module devices. Alternatively, the contamination occurrence can be also predicted, for example, by the stoppage of the clean air generating means or the variation of the differential pressure between the clean region and outside air.

Preferably, the contamination propagation prediction means is a means for predicting the propagation of contamination based on the information of the flow rate and the flow direction of air within the connection passage. For example, when the flow rate and the flow direction of air have rapidly varied, the propagation of contamination having occurred in either clean assembling module devices can be predicted.

Preferably, the contamination propagation preventing means is a means for controlling the clean air generating means, which is installed in the clean assembling module device connected to the connection passage, based on the information of the flow rate and the flow direction of air in the clean assembling module device where contamination is detected or predicted and in the connection passage connected to the clean assembling module device. The propagation of contamination to the clean assembling module device which is not contaminated can be prevented by adjusting the flow rate and the flow quantity of the clean air generated by the clean air generating means.

Moreover, in the contamination propagation preventing system, it is preferable to perform the discharge or the re-cleaning of defective works which are present in the clean assembling module device where contamination is detected or predicted and in a predetermined number of clean assembling module devices and connection passages which are successively connected to the concerned clean assembling module device on the upstream side or the downstream side. Consequently, the production of defective products can be avoided and the transferring of contaminating particles to jigs and tools on downstream processes can be avoided.

Further, in the contamination propagation preventing system, it is preferable that the production of works is continued which are present in the processes further downstream side from a predetermined number of clean assembling module devices successively connected on the downstream side of the clean assembling module device where contamination is detected or predicted, and that the production of works is discontinued which are present within the clean assembling module device where the contamination is detected or predicted and prescribed clean assembling module devices successively connected on the upstream side of the concerned clean assembling module device. With respect to the works judged that there is no possibility to be propagated, production efficiency can be maintained within a possible range by continuing normal producing operations by the range that there is no possibility to be contaminated.

Further, the contamination propagation preventing system preferably includes a cleanliness recovery means for recovering the cleanliness of the clean assembling module device or the connection passage where contamination is detected or predicted. According to the above-mentioned system, production can be resumed after the cleanliness of the clean assembling module device or the connection passage where contamination has occurred is recovered.

Preferably, the cleanliness recovery means includes a clean air generating means and an exhaust means for exhausting from the clean assembling module device, and the prevention of contamination propagation is performed by reducing the flow quantity of the clean air from the clean air generating means, which is installed in the clean assembling module device connected to the connection passage, based on the information of the flow rate and the flow direction of air in the clean assembling module device where contamination is detected or predicted and in the connection passage connected to the concerned clean assembling module device, and the recovery of cleanliness is performed by gradually increasing the flow quantity of the reduced clean air from the clean air generating means to the flow quantity which is required to ensure the cleanliness of the clean region. The situation can be prevented in which rapid down flow occurs and contamination flows into another clean assembling module device before the contamination is eliminated.

BRIEF DESCRIPTION OF THE DRAWINGS

In the drawings:

Fig. 1 is a perspective view schematically showing the construction of a clean assembling module device in accordance with the present invention;

Fig. 2 is a longitudinal cross-sectional view showing an example of the internal structure of the clean assembling module device;

Fig. 3 is a plan view schematically showing the clean assembling module device provided with a penetration part and a carrier means;

Fig. 4 is a perspective view showing an example of the structure of a flange part formed in the penetration part and the shape of a seal member;

Fig. 5 is a partially sectional view showing the connected flange parts of the penetration parts and the seal member fitted on the flange parts;

Fig. 6 is a partially sectional view showing the flange parts of the penetration part that are connected through a tunnel and the seal members fitted on the flange part and the tunnel;

Fig. 7 is a perspective view showing another embodiment of the present invention. The structure of the tunnel is shown, which is provided with a slide type carrier passage change device and a turntable type carrier passage change device;

Fig. 8 is a view showing a peripheral structure of the slide type carrier passage change device in the tunnel;

Fig. 9 is a view showing a peripheral structure of the turntable type carrier passage change device in the tunnel;

Fig. 10 is a partial perspective view showing a carrier means (rail) whose edge is chamfered;

Fig. 11 is a partial plan view showing a rail clearance $X_2$ in the case that the edge of the carrier means is chamfered;

Fig. 12 is a partial perspective view showing a carrier means without a bottom face whose edge is chamfered;

Fig. 13 is a partial plan view showing a rail clearance $X_3$ in the case that the edge of the carrier means without the bottom face is chamfered;

Fig. 14 is a partial perspective view showing a carrier means which is not chamfered as a reference;

Fig. 15 is a partial plan view showing the rail clearance $X_1$ without being chamfered as a reference;

Fig. 16 is a view showing the structure of a tunnel within which another partition is installed;

Fig. 17 Fig. 17 is a perspective view showing a further embodiment of the present invention in which the structure of the tunnel provided with a slide type carrier passage change device and a turntable type carrier passage change device;

Fig. 18 is a view showing a peripheral structure of the slide type carrier passage change device in the tunnel in accordance with the further embodiment of the present invention;

Fig. 19 is a view showing a peripheral structure of the turntable type carrier passage change device in the tunnel in accordance with a further embodiment of the present invention;

Fig. 20 is a view showing the structure of a tunnel in which another partition is installed in accordance with the further embodiment of the present invention;

Fig. 21 is a perspective view showing an embodiment in which carrier means (rails) are installed in parallel within the same module;

Fig. 22 is a perspective view of an industrial robot showing an embodiment of the present invention;

Fig. 23 is a partial perspective view showing an example of a turning arm that is formed to be bifurcated;

Fig. 24 is a perspective view showing an example of a turning arm of which a chuck is constructed so as to rotate around a horizontal axis;

Fig. 25 is a perspective view of an industrial robot showing another embodiment of the present invention;

Fig. 26 is an entire view of a contamination propagation preventing system showing an embodiment of the present invention;

Fig. 27 is a schematic view showing a constructional example of a particle counter;

Fig. 28 is a perspective view of a solid-state image pickup element that is exposed with its cover being removed;

Fig. 29 is a view showing the state of an examination when the smoke of a cigarette is introduced into a clean area "D" with a straw;

Fig. 30 is a view showing the state of a test that is executed with assuming the case of "damage";

Fig. 31 is a view showing the state of an examination when a front door is completely opened;

Fig. 32 is a view showing contamination generated in the clean area and the flow of air;

Fig. 33 is a plan view (A) and a side view (B) (including connection to a direct current power supply) which show the structure of a temperature sensor;

Fig. 34 is a view showing the contamination propagation preventing system in which a monitor system is connected;

Fig. 35 is a view of the contamination propagation preventing system, which shows a control method for generating airflow in a perpendicular direction of the contamination propagation;

Fig. 36 is a view showing the shutdown state of the clean assembling module device at the time of contamination occurrence;

Fig. 37 is a view showing the state when a rapid down flow is generated in the clean assembling module device where the contamination occurs;

Fig. 38 is a view showing the state when the down flow is gradually generated in the clean assembling module device where the contamination occurs;

Fig. 39 is a schematic perspective view showing an example of a conventional industrial robot;

Fig. 40 is a schematic perspective view showing another example of a conventional industrial robot;

Fig. 41 is a schematic perspective view showing a further example of a conventional industrial robot;

Fig. 42 is a view showing an example of the state that the contamination occurs in one of a plurality of clean assembling module devices connected to each other; and

Fig. 43 is a view showing an example of the state that the contamination occurs due to that the internal clean area in one of the clean assembling module devices connected to each other is connected to outside air.

DESCRIPTION OF THE PREFERRED EMBODIMENTS

The construction of the present invention will be described below in detail in accordance with an example of the embodiment with reference to the accompanying drawings.

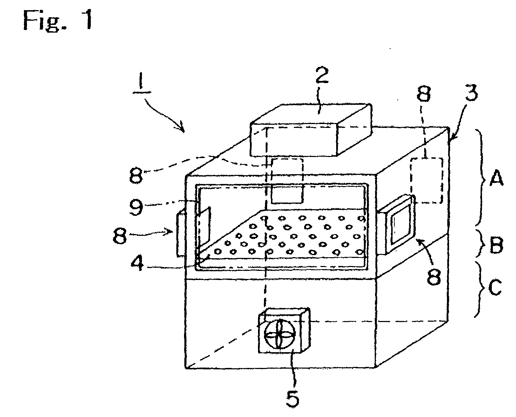

Figs. 1 through 6 show an embodiment of a clean assembling module device and a production system constructed by using it in accordance with the present invention. The clean assembling module device 1 in accordance with the present invention is a device which performs operations such as assembling, working and the like to a work 14 and is provided with a clean air generating means 2 at an upper part thereof and is constructed so as to include from the upper side of the device a working area "A", a clean air retaining exhausting area "B" and a mechanism section area "C". The clean assembling module device 1 is covered by a shielding wall, which is an outer wall and, furthermore, is shielded from the outside of the device by sealing.

The clean air generating means 2, which is a means for supplying clean air into the working area "A", is installed at the upper part of an clean area shielding wall 3 which forms the working area "A" as shown in Fig. 1, which causes clean air to flow down from the upper part of the working area "A". The clean air generating means 2 is provided with a fan for supplying air and a filter for dust not shown in detail in the drawing.

The working area "A" is a clean area for performing operations such as assembling and working to the work 14 in a clean atmosphere. In the case of the present embodiment, the outer peripheral portion of the working area "A" is surrounded with a clean area shielding wall 3 to be covered from the outside and the under side of the working area "A" is partitioned by a partition wall 4 that is capable of ventilating. Further, the clean air generating means 2 described above for supplying clean air into the working area "A" is arranged at the upper part of the working area "A".

The partition wall 4 is a partition provided with a plurality of small holes, which is disposed between the areas. For example, in the case of the present embodiment, a punched metal is arranged as the partition wall 4 so as to partition into the working area "A" and the mechanism section area "C", (alternatively, into the working area "A" and the clean air retaining and exhausting area "B".) (referred to as "punched metal 4"). The punched metal 4 operates as a resistance such that the flow of the down flow clean air is partly restricted to retain in the working area "A" and partly exhausted on the mechanism section area "C" side through the small holes. Therefore, according to the punched metal 4, the flow resistance can be controlled. In other words, the punched metal 4 acts as a resistance for clean air flowing down to make the working area "A" at a proper pressure which is a little higher than the outside pressure and to assure an appropriate flow quantity toward the mechanism section area "C" side, and thus the working area "A" can be controlled in a state suitable for operations. As a result, in the clean assembling module device 1 of the present embodiment, the clean air is partly prevented from flowing and retained by the punched metal 4, and thus the inside of the working area "A" is maintained at a positive pressure (the state whose pressure is higher than the outside pressure (concretely, atmospheric pressure)) in comparison with the mechanism section area "C" or the outside of the device. In this case, air from the outside whose cleanliness is low (in other words, dusty) is prevented from flowing into the working area "A" where a high degree of cleanliness is required, and thus dust or the like is difficult to be entered. Further, dust entered into the working area "A" or dust occurred in the working area "A" passes through the small holes of the punched metal 4 to be exhausted to the mechanism part area "C".

Since the clean assembling module device 1 has a construction described above, the open area ratio of the punched metal 4 and the rotational speed of the fan in the clean air generating means 2 are especially major factors to determine the pressure in the working area "A". In other words, when the open area ratio of the punched metal 4 is small and air-blowing amount by the clean air generating means 2 is large, the working area "A" becomes at a higher positive pressure, but when the above-mentioned relations are reversed, the working area "A" does not become at a positive pressure state so much. In the present embodiment, the working area "A" is controlled to be at a positive pressure within a proper range by appropriately adjusting the open area ratio and the air-blowing amount. The open area ratio of the punched metal 4 is the occupying ratio of the small holes to the entire punched metal 4, which varies according to the size and the number of the small holes. However, in spite of the same open area ratio, when the positions of the small holes are changed or the density is varied from place to place, the flow of clean air may be affected to cause to vary the pressure. Therefore, the open area ratio of the punched metal 4 may mean the cases including the differences of their positions and densities.

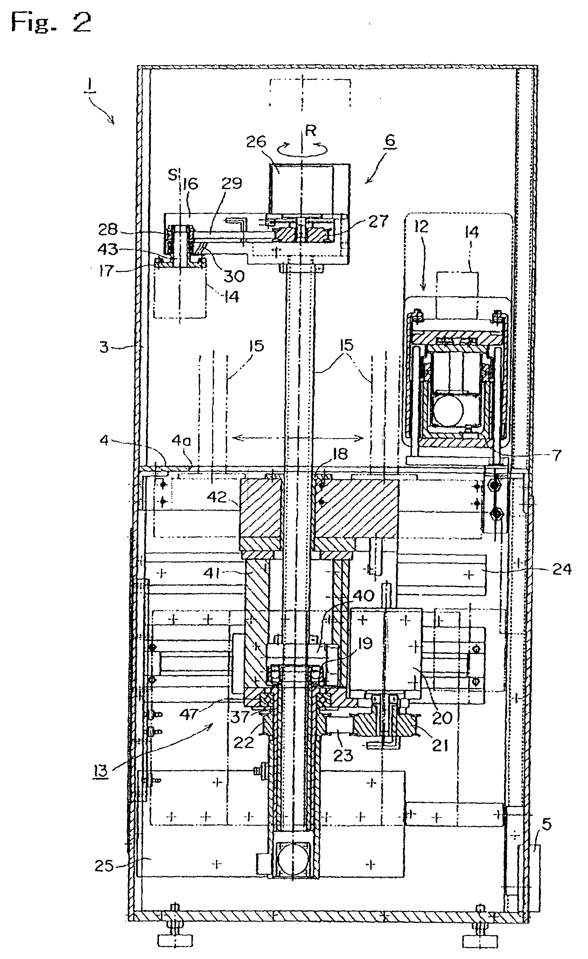

The punched metal 4 of the clean assembling module device 1 in accordance with the present embodiment is provided with a slit hole 4a for passing through one part of the mechanism 13 for performing assembling or the like of a work 14 other than the small holes for ventilation (see Fig. 2). When the mechanism 13 is provided with, for example, a shaft only performing a turning motion, the slit hole 4a may be formed only in a circular hole through which the shaft passes. When the mechanism 13 moves horizontally, the slit hole 4a may be formed in a slot (passage) along the movement. In the case of the present embodiment, since a shaft 15 included in the mechanism 13 is made in a linear motion with a specified stroke, the slit hole 4a is formed to be a slot. In the clean assembling module device 1 having the construction described above, the main body of the mechanism 13 is located in the mechanism part area "C" and only upper portion of the shaft 15 of the mechanism 13 is located in the working area "A". Therefore, dust which may occur when the mechanism 13 is operated is exhausted by an exhaust fan 5 without entering into the working area "A", and thus the cleanliness of the working area "A" which is the essential area is not affected.

The clean air retaining and exhausting area "B" is an area arranged on a lower side of the working area "A" (lower side of the punched metal 4 in the case of the present embodiment) and on an upper side of the mechanism part area "C" where a drive source which may be a dust generating source and the like are located. One part of clean air flowing through the working area "A" is exhausted to the clean air retaining and exhausting area "B" side by passing through the small holes of the punched metal 4. In the present embodiment, the open area ratio of the punched metal 4 and the rotational speed of the exhaust fan 5 are adjusted and controlled such that the pressure in the clean air retaining and exhausting area "B" is at an intermediate level between the pressure of the working area "A" and that of the mechanism part area "C". The exhaust fan 5 is controlled for independently controlling the pressure and the flow quantity of the flow of clean air. For example, when the demanded flow quantity is large and the demanded pressure of the working area "A" is low, the increase of the rotational speed of the exhaust fan 5 can depressurize the mechanism area part "C" and is capable of setting the pressure of the working area "A" low and increasing the flow quantity of the clean air. In other words, in the present embodiment, the flow quantity of the working area "A" is controlled by the clean air generating means 2 and the pressure of the working area "A" is controlled by the exhaust fan 5. Therefore, the flow quantity and the pressure of the working area "A" can be independently controlled as separate parameters. For example, dust can be easily exhausted to the clean air retaining and exhausting area "B" onward by increasing the flow quantity within the working area "A". However, when the pressure has considerably increased according to the increase of the flow quantity, dust may flow into the neighboring clean assembling module device 1. However, the situation can be avoided by adjusting the pressure with the exhaust fan 5. In other words, the environment where dust is easily exhausted can be attained by suppressing the increase of the pressure while increasing the flow quantity.

The mechanism part area "C" is the area where the main body of the mechanism 13 is installed and which accommodates the main body, the drive source and the like of the mechanism 13 such as a robot for performing operations such as assembling, working or the like to the work 14. The pressure of the mechanism part area "C" is set to be low in comparison with the pressure of the working area "A" and thus air flows into the mechanism part area "C" from the working area "A" but air does not flow backward from the mechanism part area "C" to the working area "A". The exhaust fan 5 is provided on the side portion or the like of the mechanism part area "C" such that air flowing into the mechanism part area "C" through the working area "A" and the clean air retaining and exhausting area "B" is exhausted outside of the device, which results in maintaining the mechanism part area "C" in the negative pressure state. Further, the flow of clean air in the clean assembling module device 1 is formed by exhausting operation with the exhaust fan 5, and thus dust is hard to enter into the clean assembling module device 1. In addition, dust having been entered into the module device 1 or dust generated within the module device 1 can be blown outside by using the exhaust fan 5.

The mechanism 13 is, for example, an industrial robot performing assembling or the like of the work 14. The main body, the drive source and the like of the mechanism 13 are installed within the mechanism part area "C" and the portion performing operations (hereinafter, the portion is referred to as "working mechanism 6") such as assembling, working, carrying or the like of the work 14 is installed in the working area "A". One part of the working mechanism 6 (concretely, a shaft 15 connecting the working mechanism 6 to the mechanism 13) penetrates through the clean air retaining and exhausting area "B" and reaches to the mechanism part area "C". The mechanism 13 will be described below in detail.

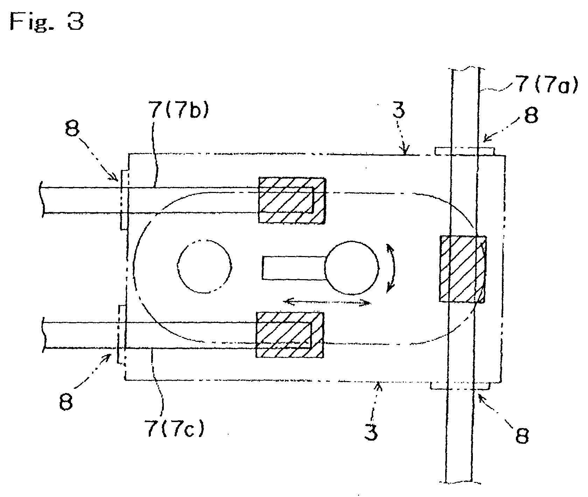

The clean assembling module device 1 is provided with a carrier means 7 for carrying the work 14 into the working area "A" or carrying out the work 14 from the working area "A", for example, carrier rails for guiding a work carrier pallet 12 on which the work 14 is carried (see Fig. 3). In the present embodiment, a penetrating part 8 is formed through which the carrier means 7 penetrates in the working area "A" of the clean assembling module device 1 to allow the connection with the outside. The penetrating part 8 is formed at four positions. Two of them are disposed at opposed positions of the clean area shielding wall 3 so that the main work 14 can be linearly carried within the clean assembling module device 1 and a linear carrier means 7 (as shown by the symbol "7a" in the drawing) is arranged so as to pass through the working area "A" straight (see Fig. 3). On the other hand, the remaining two penetrating parts 8 are disposed on the same clean area shielding wall 3 side by side and different carrier means 7b, 7c are respectively passed through. The carrier means 7b, 7c are carrier passages for the work 14 such as components which are mainly assembled to the main work 14 and are disposed so as to be perpendicular to the linear carrier means 7a as shown in the drawing and terminated before reaching to the linear carrier means 7a. In Fig. 3, the area where components or the like are sucked up by an air chuck 17 of the mechanism (industrial robot) 13 described below and the area where the components or the like are attached on the main work 14 are shown by the oblique lines.

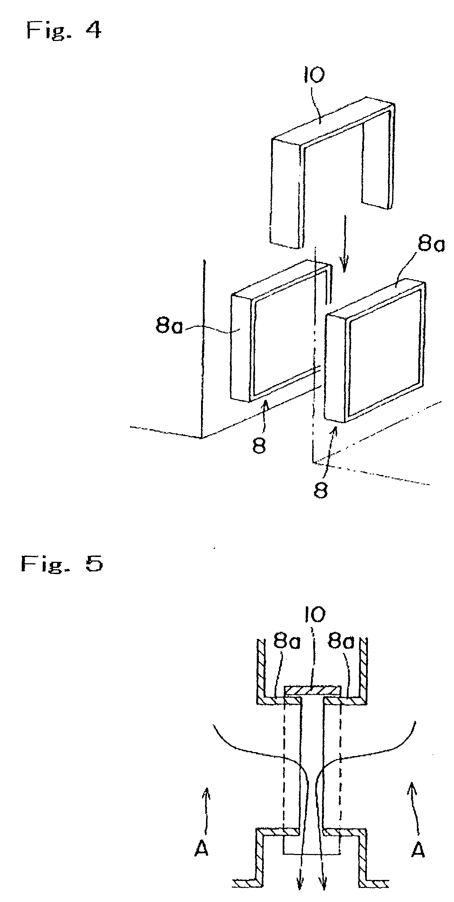

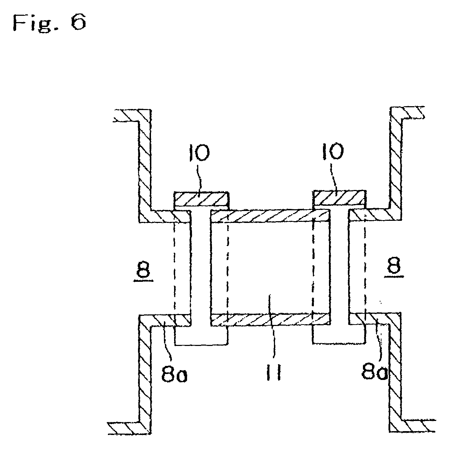

The penetrating part 8 in the present embodiment is formed such that its circumferential end portion is protruded outward from the wall face of the clean area shielding wall 3 (the protruded portion is referred to as a "flange part" in the present specification and is shown by the symbol 8a). Adjacent clean assembling module devices 1 can be connected by means of that the penetration parts 8 are connected by using the flange parts 8a. In this case, a production system can be formed by connecting a plurality of clean assembling module devices 1 and works 14 can be successively carried into or carried out from the respective clean assembling module devices 1 by providing with a carrier means 7 penetrating through the penetration parts 8 of a plurality of clean assembling module devices 1. In this case, the respective clean assembling module devices 1 are required to be connected in a sealed state so as to maintain the cleanliness and the pressure in the working area "A" and thus a connection means for sealing between the penetration parts 8 is appropriately provided. For example, in the case of the present embodiment, a U-shaped seal member 10 is provided as the connection means, which is fitted to the flange parts 8a of the penetration parts 8 to seal the portion between the flange parts 8a. Accordingly, the clean assembling module devices 1 are connected in a sealed state from the outside (see Figs. 4 and 5). In this case, since the working area "A" of the respective clean assembling module devices 1 is maintained at the positive pressure, air flows into the connecting portion from both sides of the clean assembling module devices 1 (see Fig. 5) and flows out from the open part that is not surrounded by the U-shaped seal member 10 fitted to the flange parts 8a. Preferably, the seal member 10 is attached to the flange parts 8a from the upper side such that the open part of the U-shaped seal member 10 faces downward. In this case, since the open part faces downward, dust is hard to enter into the working area "A" from the open part. Also, it is further preferable to apply a means for preventing air from leaking out from the spaces between the seal member 10 and the flange parts 8a when the U-shaped seal member 10 is attached, for example, gel-like sealing material is coated between the seal member 10 and the flange parts 8a to assure the seal.

In the embodiment described above, the clean assembling module devices 1 are directly connected by the flange parts 8a of the penetration parts 8. However, another member such as a tubular member may be interposed between them. For example, the clean assembling module device 1 shown in Fig. 6 is connected to another clean assembling module device 1 by means of a tunnel 11, which is interposed between the penetration part 8 and another penetration part 8. Both ends of the tunnel 11 are respectively connected to the flange parts 8a of the respective penetration parts 8 and are sealed by the U-shaped seal member 10 similar as described above, which is fitted on the connecting portion. The tunnel 11 is formed in a size capable of accommodating the carrier means 7 and passing the work carrier pallet 12 therethrough. Similarly as the cases described above, it is preferable that gel-like sealing material is coated between the seal member 10 and the flange part 8a, and on joining portions between the seal member 10 and the tunnel 11, and the seal member 10 is preferably attached such that the open part of the U-shaped seal member 10 faces downward.

Further, in the present embodiment, a door 9 for maintenance is fitted on the clean region shielding wall 3 such that an operator or the like can inspect the inside of the working area "A" by opening the door 9. As a result, for example, when the work carrier pallet 12, the working mechanism 6 or the like stops in the clean assembling module device 1, immediate action and handling are possible. The door 9 is constructed such that a plurality of aperture areas can be selected corresponding to the contents of maintenance. According to the situation described above, it is preferable that the operation can be more simplified and dust can be prevented from entering into the working area "A" due to a needlessly wide aperture part. Embodiments capable of selecting a plurality of aperture areas include, for example, not only an embodiment capable of changing the aperture area by using only one door 9, but also an embodiment provided with several doors 9 with different aperture areas so as to be capable of selecting the appropriate door 9.

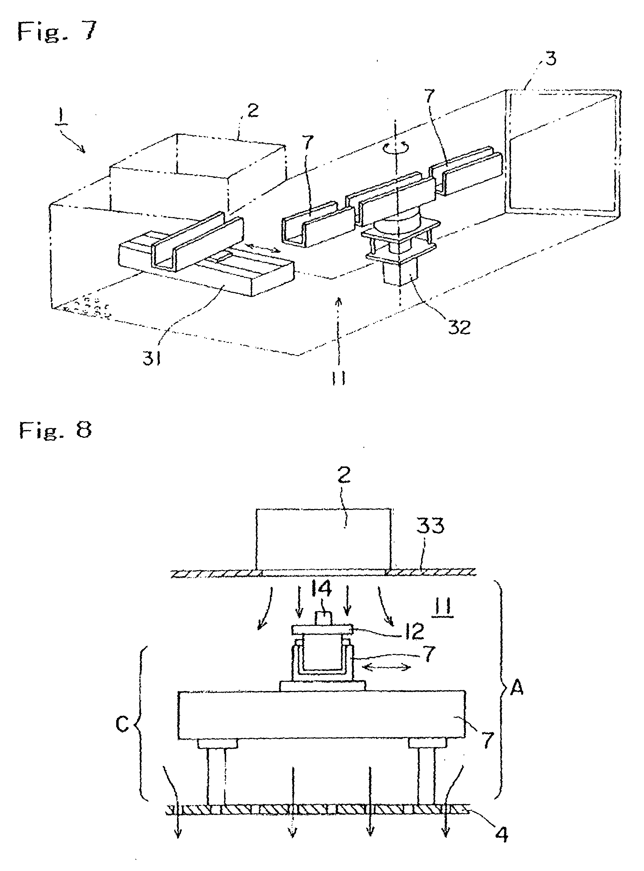

The embodiments described above are preferred examples of the present invention. However, the present invention is not limited to the embodiments and many modifications can be made without departing from the subject matter of the present invention. For example, in the embodiment described above, the clean assembling module device 1 is described, in which the carrier means 7(7a) penetrating through the clean assembling module device 1 or the carrier means 7(7b, 7c) terminated at one end within the device is arranged. However, a production system may be used in which the carrier passage for the work carrier pallet 12 can be changed by providing on the way with a change device such as a turntable as well as the simple rail as the carrier means 7. The construction of the tunnel 11, which is an embodiment of the clean assembling module device 1 in the above-mentioned production system, will be described below (see Fig. 7 and the like)

The carrier means 7 in the production system shown in Figs. 7 through 9 is capable of changing the carrier passage for the work carrier pallet 12 by providing with a slide type carrier passage change device 31 and a turntable type carrier passage change device 32 on the way. Since the respective change devices 31, 32 may cause to be a dust generating source in the inside of the tunnel 11, as similar to the above-mentioned embodiment, some countermeasures are required to keep the cleanliness within the working area "A".

In the tunnel 11 in the production system shown in Figs. 7 through 9, the clean air generating means 2 is installed on the upper side of the upper partition wall 33 at the upper part of the tunnel 11 and the lower partition wall 4 having a plurality of small holes is installed on the lower side of the carrier means 7. Further, the tunnel 11 is separated from the outside by the clean region shielding wall 3 which covers its outer periphery. The region ranging from the upper partition wall 33 to the lower partition wall 4 corresponds to the working area "A" (hereinafter, simply referred to as the working area "A"). The lower partition wall 4 is, for example, a partition wall such as a punched metal or a grating, which is provided with a plurality of small holes. As similar to the above-mentioned embodiment, the lower partition wall 4 serves as a resistance to clean air flowing downward to allow the working area "A" to maintain at an appropriate pressure slightly higher than the outside pressure and ensure an appropriate flowing-out quantity from the small holes, thereby the cleanliness and the flow of air in the working area "A" are controlled.

A drive source 34 is installed in the tunnel 11 for driving the slide type carrier passage change device 31 or the turntable type carrier passage change device 32. The region where the drive source 34 is installed corresponds to the mechanism section area "C" in the embodiment described above. Therefore, in the tunnel 11 in the embodiment, a part of the working area "A" is used as the mechanism section area "C".

In the construction described above, the inside of the tunnel 11 including the working area "A" is maintained at a positive pressure compared to its outside and clean air flows downward in the tunnel 11, which are controlled by the open area ratio of the lower partition wall 4 and the rotational speed of the exhaust fan (not shown in the drawing in the present embodiment). In this tunnel 11, the work carrier pallet 12 on which the work 14 is placed is positioned on the upper side of the drive source 34, which is regarded as a dust generating source. Therefore, clean air blowing downward from the clean air generating means 2 blows over the work 14 and the work carrier pallet 12 at first, and then passes around the carrier means 7, the slide type carrier passage change device 31, the turntable type carrier passage change device 32 on the lower side thereof, after that, the clean air is exhausted from the lower partition wall 4 having small holes to the outside of the tunnel 11. Consequently, the work 14 on the work carrier pallet 12 which is required cleanliness can be carried through the tunnel 11 without being attached with dust at all even when the dust generating source is provided within the closed tunnel 11. In this case, the mechanism (unit) disposed in the mechanism section area "C" is preferably installed in more dust generating order, that is, the carrier means 7 and then the drive source 34 from the upper side to restrain the dust.

The tunnel 11 described above is disposed between the clean assembling module devices 1 in the above-mentioned embodiment to construct the production system. The tunnel 11 is preferably provided with a door 9 for maintenance on the side wall or the like as similar to the clean assembling module device 1 described above.

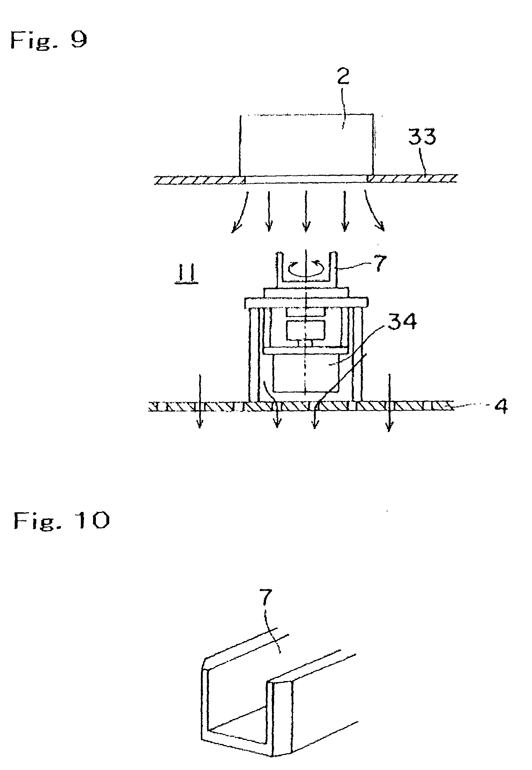

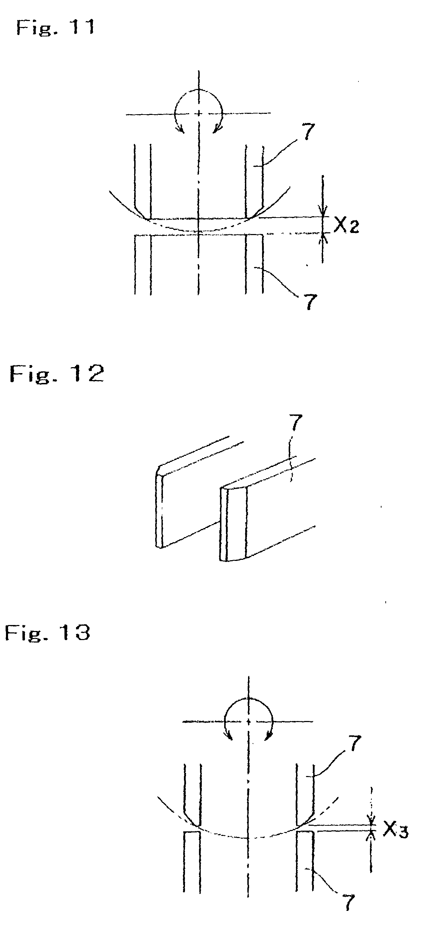

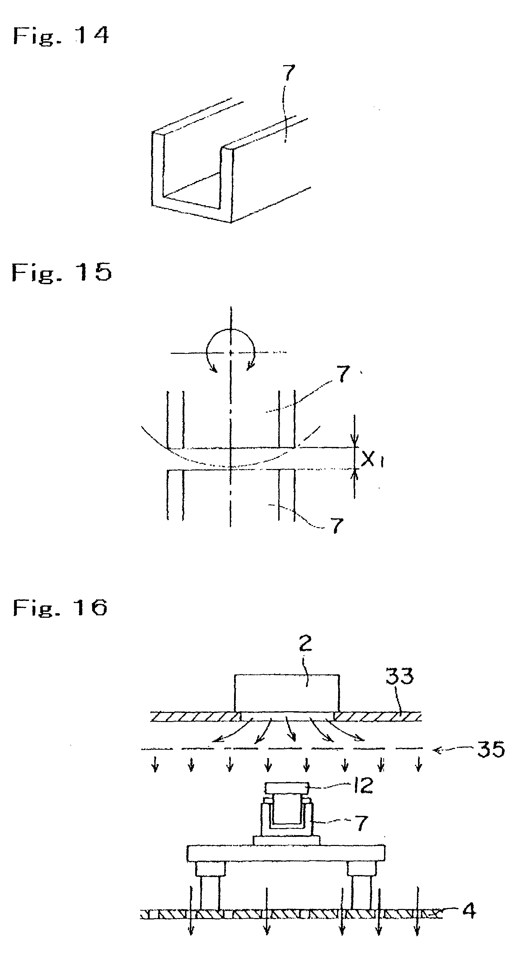

A turnable carrier means (rail) 7 on the turntable type carrier passage change device 32 is constructed so as to avoid the interference with a neighboring carrier means (rail) 7 on the fixed side such that dust is not generated, and in addition, it is preferable that the clearance "X" between two carrier means is set to be as small as possible. Consequently, it is possible for the work carrier pallet 12 to be smoothly carried between two carrier means 7. For example, in the case of the present embodiment, as shown in Figs. 10 and 11, the rail clearance " X 2 " is set to be smaller by chamfering the edge of the carrier means 7 than the rail clearance " X 1 " in the case without chamfering (see Figs. 14 and 15). Further, when the carrier means 7 comprising the rail without a bottom face is applied as shown in Figs. 12 and 13, it is possible that the rail clearance "X 3 " is set to be further smaller than the rail clearance "X 2 ".

As shown in Fig. 16, another partition wall 35 may be installed which is formed of a film or cloth having a fine mesh, or formed of a punched metal or the like at a position apart from the upper partition wall 33 of the tunnel 11 with a specified distance downward. In this case, clean air which is blown out from the clean air generating means 2 can be expanded in a wide range and uniformly within the tunnel 11.

In the embodiment described above, the clean assembling module device 1 is provided with the clean air generating means 2 on the upper side of the device and is constructed so as to include the working area "A", the clean air retaining and exhausting area "B", and the mechanism section area "C" from the upper side of the device. Alternatively, the clean air generating means 2 is provided on the side face of the clean assembling module device 1 and the clean assembling module device 1 may be constructed such that the working area "A", the clean air retaining and exhausting area "B", and the mechanism section area "C" are arranged from the clean air generating means 2 side. In this case, as similar to the embodiment described above, the cleanliness of the working area "A" is maintained by setting the working area "A" in the positive pressure state, and dust entering into the working area "A" or dust occurred in the working area "A" can be exhausted to the mechanism section area "C" side through the small holes of the punched metal 4.

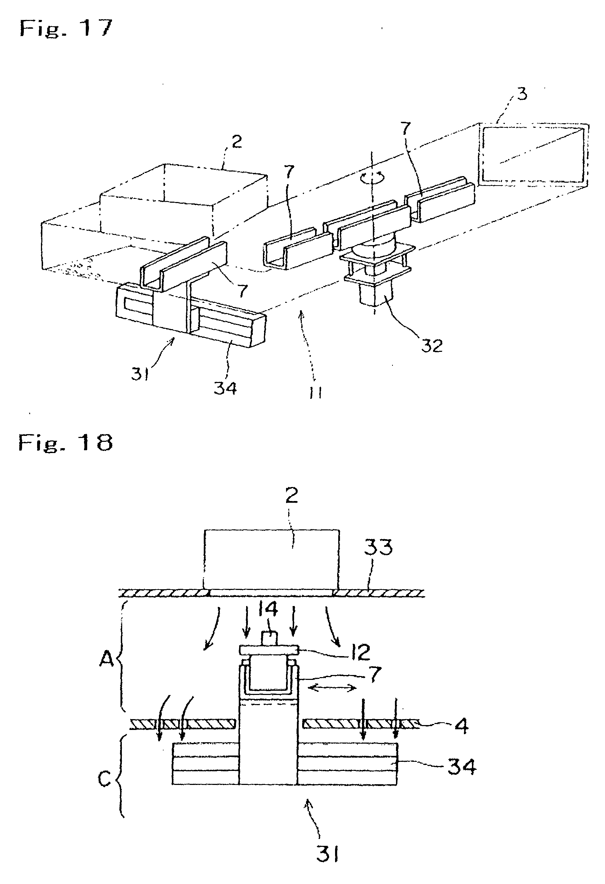

Another embodiment of the present invention will be described below. Another construction of the tunnel 11 in the clean assembling module device 1 will be described in which the carrier passage for the work carrier pallet 12 can be changed by providing a change device such as a turntable (see Figs. 17 and the like).

The tunnel 11 shown in Figs. 17 through 20 comprises the clean air generating means 2 installed on the upper part of the tunnel 11, the upper partition wall 33, and the lower partition wall 4. The tunnel 11 includes the working area "A" and the mechanism section area "C" and is closed from the outside by the clean region shielding wall 3 covering its outer periphery. The working area "A" and the mechanism section area "C" are partitioned by the lower partition wall 4 having holes such as the punched metal and their flow resistances are respectively controlled (see Fig. 18). The drive source 34 which is a large dust generating source is installed on the outside of the tunnel 11 (for example, underside of the lower partition wall 4). In the construction described above, the inside of the tunnel 11 is controlled in the positive pressure with respect to the outside of the tunnel 11 by the above-mentioned clean air generating means 2, and the open area ratio of the lower partition wall 4 and the rotational speed of the exhaust fan 5 are controlled such that the clean air flows downward within the tunnel 11. The work carrier pallet 12 on which the work 14 is placed is positioned on the upper side of the carrier means 7, therefore, clean air blowing downward from the clean air generating means 2 blows over the work 14 and the work carrier pallet 12 at first, and then passes around the carrier means 7 on the lower side thereof, after that, the clean air is exhausted from the lower partition wall 4 having holes to the outside of the tunnel 11. Consequently, the work 14 on the work carrier pallet 12 which is required cleanliness can be carried through the tunnel 11 without being attached with dust at all even when the turning device (turntable type carrier passage change device 32) or a part of the sliding device (slide type carrier passage change device 31) is provided within the closed tunnel 11.

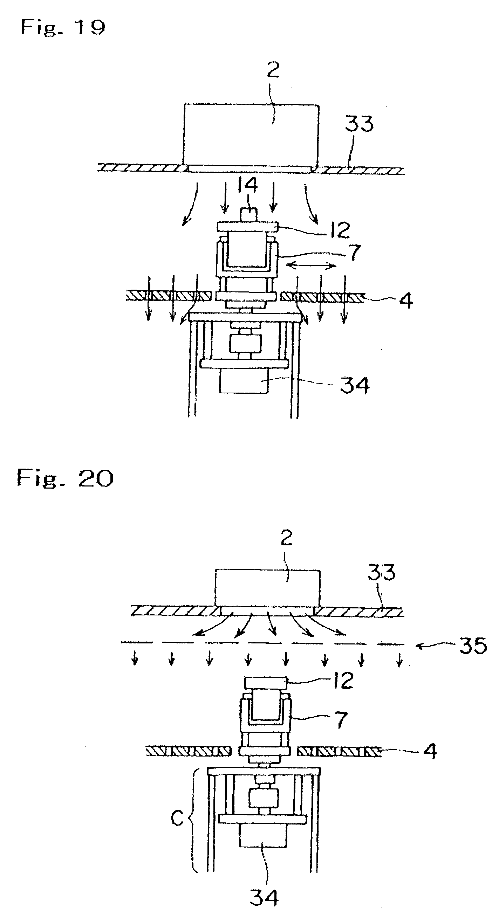

In the embodiment shown here, the clean assembling module device 1 is connected to the end portion of the tunnel 11. Not shown in the drawing, the door for maintenance is provided on the clean partition wall shielding wall 3 of the tunnel 11. Further, chamfering is performed on the end face of the carrier means (rail) 7 of the turntable type carrier passage change device 32 as similar to the above-mentioned embodiment. Consequently, the work carrier pallet 12 can be smoothly carried between two carrier means by setting the rail clearance "X 2" as small as possible without generating dust due to the interference with the neighboring fixed side carrier means (rail) 7. The rail clearance " X 1" without chamfering becomes larger than the rail clearance " X 2 ". In addition, the rail clearance " X 3 " for the carrier means 7 without a bottom face as shown in Figs. 12 and 13 becomes further smaller than " X 2 ", which is further profitable for the work carrier pallet 12 to be carried between two carrier means smoothly. Further, as shown in Fig. 20, in order to produce uniform down flow of clean air, which is blown out from the clean air generating means 2, in a sufficiently wide range within the tunnel 11, a partition wall 35 is preferably installed which is formed of a film or cloth having a fine mesh or formed of a punched metal or the like at a position apart from the upper partition wall 33 of the tunnel 11 with a specified distance downward.

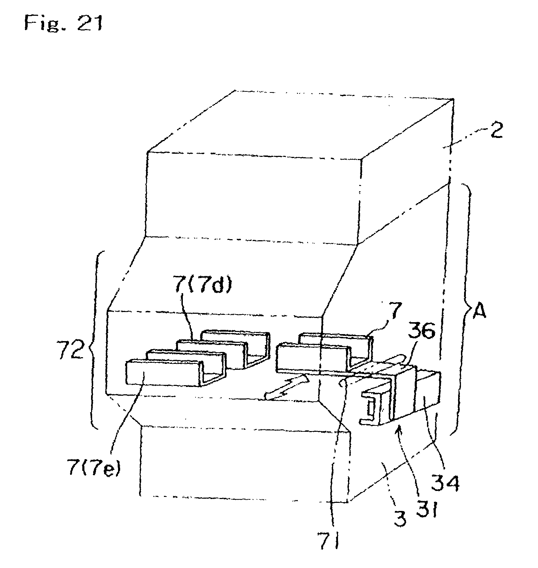

In addition, the carrier means (rail) 7 for the work carrier pallet 12 may be installed in two or more lines in parallel within a single clean assembling module device 1 (see Fig. 21). A plurality of carrier means 7 comprising two or more lines which are installed in proximity of the working area "A" may be used as a forward path or a return path for the work carrier pallet 12 in any way. For example, when the carrier means shown by the notational symbol "7d" is used as the forward path and the carrier means shown by the notational symbol "7e" is used as the return path, the carrier means 7e can be used as a bypass by installing the slide type carrier passage change device 31 when the work carrier pallet 12 is positioned on the carrier means 7d. The carrier means 7d, 7e are installed in the same module, and thus clean air from the clean air generating means 2 disposed on upper side blows over all carrier means 7a, 7b and the cleanliness is maintained. Consequently, the clean assembling module device 1 can be constructed which is capable of maintaining the same cleanliness in a compact manner at a low cost and of shortening a tact (work time). Similar effects are obtained even when the number of carrier means 7 is not less than three as well as two. The drive source 34 which is the dust generating source is installed on the outside of the module and a connecting plate 36 is connected to the carrier means 7 through a through hole 71 formed in the clean region shielding wall 3. As described above, the construction is realized which is capable of carrying the work carrier pallet 12 with respect to two or more carrier means 7 by using the slide type carrier passage change device 31 in a compact manner while maintaining its cleanliness. The notational symbol 72 means a cover. When the drive source 34 is supposed to be a stepping motor or the like, which can control its position, three or more carrier means 7 can be handled.

Next, an industrial robot in accordance with an embodiment of the present invention is shown in Figs. 1, 2 and 22. The industrial robot in accordance with the present embodiment is installed in the clean assembling module device 1 as the mechanism 13 (hereinafter, referred to as "industrial robot 13").

The industrial robot 13 of the present invention includes a horizontal sliding mechanism 44, an upper and lower lifting mechanism 45 and an arm turning mechanism 46 and is a robot for performing assembling, working or the like to the work 14. In the present embodiment, the industrial robot 13 is installed in the clean assembling module device 1 as a working robot for carrying a component or the like to a prescribed position for mounting the component or the like on a main work (a base work on which various components are mounted).

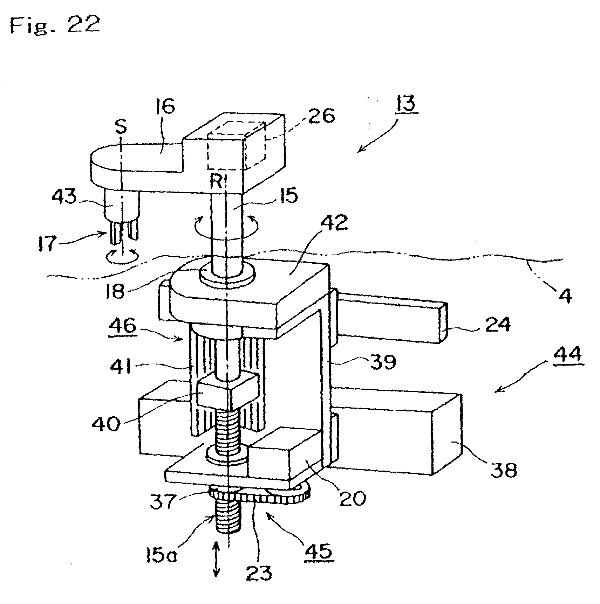

The horizontal sliding mechanism 44 comprises, for example, a linear motor (not shown in the drawing) that horizontally moves a shaft 15 in a linear manner, a horizontal slide guide 24, and a horizontal slide shaft 38. In this case, the shaft 15 can be moved in the horizontal direction in the linear manner together with the frame 39 by means of linearly driving the frame 39 which supports the shaft 15 or the like. For example, the shaft 15 of the present embodiment is movable with a specified stroke as shown in Fig. 2. Also, in the present embodiment, a hollow shaped shaft 15 is used. In Fig. 22 or the like, the rotational center axis of the shaft 15 is shown by the notational symbol "R".

In the industrial robot 13 of the present embodiment, a mounting face for mounting the industrial robot 13 is preferably installed in a parallel direction to the axial direction of the shaft 15. In other words, as shown in Fig. 22, the face on which the horizontal slide guide 24 and the horizontal slide shaft 38 are mounted is a vertical face in the drawing, and the shaft 15 is set in a perpendicular manner. As described above in the present embodiment, the face parallel to the axial direction of the shaft 15 is the mounting face for the entire robot.

The upper and lower lifting mechanism 45 comprises the shaft 15, a shaft guide part 18 supporting the shaft 15, and an upper and lower lifting drive device 20 which moves the shaft 15 up and down. The upper and lower lifting drive device 20 is a drive source such as a motor (hereinafter, referred to as "lifting motor 20") for moving the shaft 15 to lift or lower to make the working mechanism 6 move upward or downward. The shaft guide part 18 is a bearing which rotatably and slidably supports the shaft 15, and supports the shaft 15 near the halfway portion thereof in the axial direction such that the moment and the inertia acting on the shaft 15 are made uniform at the time of horizontal sliding. Also, a bearing 19 supporting the shaft 15 at a position different from the shaft guide part 18 is mounted on the lower side of the shaft guide part 18. In addition, in the present embodiment, a threaded part 15a is formed on the periphery of the shaft 15 at the lower part of the bearing 19 and a rotational tube 37 having a female screw engaging with the threaded part 15a on its inner peripheral face is provided around the periphery of the threaded part 15a (see Fig. 2). The rotational tube 37 is rotatably supported by a bearing 47 but is supported so as not to move in the axial direction. A pulley 22 for rotating the rotational tube 37 is fixed on the periphery of the rotational tube 37. A timing belt 23 is stretched between the pulley 22 and a pulley 21 fitted on the shaft of the lifting motor 20. When the lifting motor 20 is driven to rotate the pulleys 21 and 22, the rotational tube 37 is rotated thereby and the shaft 15 is lifted or lowered by the operation of the screw engaged therewith. The shaft guide part 18 of the present embodiment is fitted to a hollow portion of the turning drive device 42 penetrated by the shaft 15 such that its flange portion is engaged with the turning drive device 42 and constructed to be integrally formed with the turning drive device 42.

The arm turning mechanism 46 includes a turning arm 16 to which a chuck 17 (chuck includes an air chuck) is mounted, a shaft turning guide 40, a turning element 41, and the turning drive device 42. The turning drive device 42 is a drive source such as a motor (hereinafter, referred to as "turning motor 42") which rotates the shaft 15 with a predetermined amount through the shaft turning guide 40 and the turning element 41. The shaft turning guide 40 is a large diameter portion fitted on the middle of the shaft 15 and is integrated with the shaft 15 so as to be unable to rotate. The turning element 41 is a member, for example, formed in a half cylindrical shape and rotating on a concentric circle with the shaft 15 and a groove portion engaging with a side edge of the shaft turning guide 40 are provided on the inner face side thereof. The groove portion comprises grooves extending in the axial direction of the shaft 15 by which the shaft turning guide 40 is permitted to move in the vertical direction but restricted to rotate freely. The turning motor 42 is installed on the upper side of the turning element 41, which is rotated by driving the turning motor 42. The shaft turning guide 40 and the shaft 15 are turned by the same amount through the turning element 41, and the turning arm 16 can be turned. When the shaft turning guide 40 is turned as described above, the shaft 15 turns the same amount as the shaft turning guide 40 and simultaneously the shaft 15 relatively turns with respect to the rotational tube 37 to cause to move up or down by the corresponding amount. Therefore, the shaft 15 can be only turned without moving up or down by means of that the rotational tube 37 is turned by the same amount to cancel the amount of relative rotation.

The shaft 15 of the present embodiment is movable within a range with a specified stroke as shown in Fig. 2, and the chuck 17 can be moved by means of combining a linear motion and a turning motion within an elliptical range as shown by the alternate long and short dash line in Fig. 3. Therefore, the work 14 such as a component part can be freely moved within the range.

The main body, the drive source and the like of the industrial robot 13 (concretely, the arm turning mechanism 46 except the turning arm 16, the horizontal sliding mechanism 44, and the upper and lower lifting mechanism 45) are installed within the mechanism section area "C", and in the working area "A" is installed the portion performing operations such as carrying of the work 14 (concretely, the portion including the turning arm 16 and the chuck 17 fitted at the end portion of the arm, hereinafter referred to as "working mechanism 6"). The punched metal 4 is installed at the upper position of the turning motor 42 and the shaft guide part 18 and at the lower position of the turning arm 16.

The turning arm 16 is attached on the upper end of the turnable shaft 15 so as to extend in the lateral direction and turns with turning of the shaft 15. In the present embodiment, a component part or the like is held (or sucked) by the chuck 17 fitted at the arm end of the turning arm 16 which can be turned and is carried to a prescribed position (the mounting position or its vicinity on the main work 14). The chuck 17 is constructed to be rotatable by being attached to the rotation shaft 43 such that the work 14 held by sucking or the like can be rotated. The center axis of the rotation shaft 43 is shown by the notational symbol "S" in Fig. 22 or the like. The industrial robot 13 of the present embodiment includes a motor 26 disposed at the upper end of the shaft 15, a pulley 27 coaxial to the motor 26, a pulley 28 fixed to the rotation shaft 43, a timing, belt 29 stretched over between the pulleys 27 and 28, and the like. Therefore, the direction of a component part can be appropriately corrected by driving the motor 26 to accurately mount on the main work 14. As shown in Fig. 2, a dust inlet port 30 for sucking dust occurring from the chuck 17 so as not to fall the dust in the working area "A" is provided on the lower portion of the turning arm 16 at the vicinity of the chuck 17. An intake air means 25 is installed for sucking the inside of the hollow shaped shaft 15 from a lower end in the mechanism section area "C". The dust sucked from the dust inlet port 30 passes through the hollow shaped shaft 15 and is sucked by the intake air means 25.

As described above, in the industrial robot 13 of the present embodiment, the working mechanism 6 comprising of the turning arm 16 and the like are disposed above the shaft guide part 18, and the horizontal sliding mechanism 44, the upper and lower lifting mechanism 45 and the like are disposed under the shaft guide part 18. Therefore, the weight distribution is equalized with respect to the axial direction of the shaft 15 and the weight balance is maintained with respect to the shaft guide part 18. Consequently, the moments and the inertias acting on the shaft 15 become equal at the time of the horizontal sliding and thus a high degree of rigidity and accuracy are easily obtained.

Further, in the industrial robot 13 of the present embodiment, carrying or the like can be freely performed on the work 14 within an elliptical range by combining an operation turning the turning arm 16 within the working area "A" and an operation linearly moving the shaft 15 supporting the turning arm 16. In this case, since the multi-joint construction like a conventional joint type robot arm is not required, it is not necessary to consider the interference between the joints and it is easy to miniaturize.

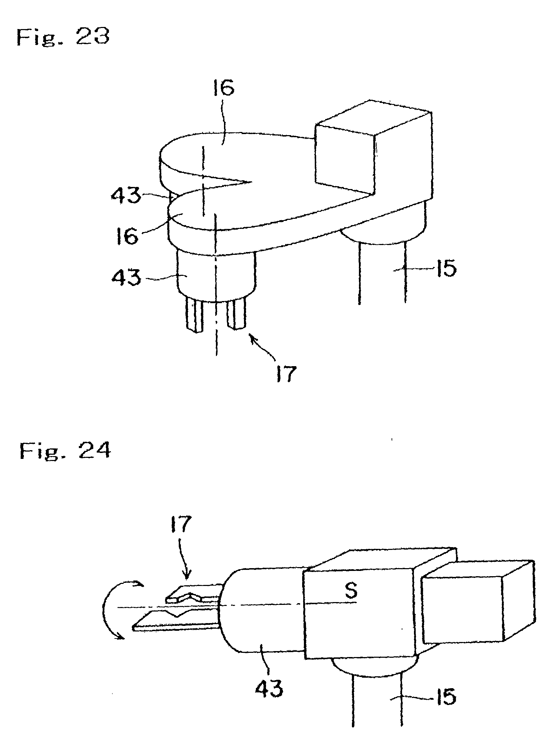

The embodiment described above is a preferred example of the present invention. However, the present invention is not limited to the embodiment and many modifications can be made without departing from the subject matter of the present invention. For example, in the present embodiment, carrying or the like is performed on the work 14 by the single turning arm 16. However, the construction can be adopted which is provided with a plurality of turning arms 16 such as a bifurcated turning arm 16 as shown in Fig. 23. In this case, carrying or the like can be performed on a plurality of works 14 at the same time by means of attaching the chuck 17 at the respective arm ends of the respective turning arms 16.

In the present embodiment, the chuck 17 is fitted to the rotation shaft 43 that turns about the vertical axis, but the chuck 17 is not limited to the embodiment described above. For example, as shown in Fig. 24, the chuck 17 may be constructed so as to turn about the horizontal axis.

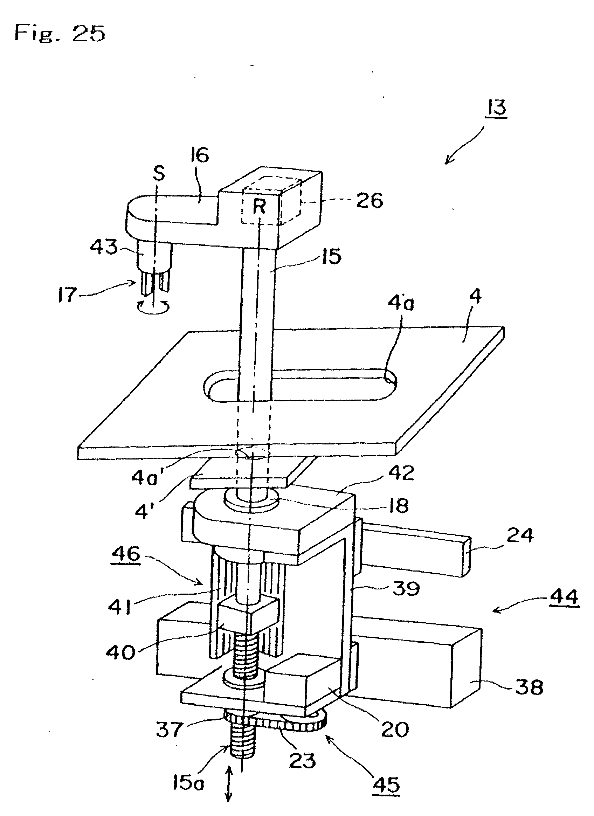

Further, the distance between the turning motor 42 and the turning arm 16 is not limited to the embodiment and appropriate modifications can be performed depending on the type or the size of the work 14. For example, the industrial robot 13 shown in Fig. 25 is constructed such that the distance between the turning motor 42 and the turning arm 16 is large and the shaft 15 easily penetrates through the punched metal 4.

In the industrial robot 13 shown in Fig. 25, the partition wall (punched metal) 4 is constructed of a first punched metal 4 having a slit hole 4a such that the industrial robot 13 is capable of sliding in the horizontal direction and a second punched metal 4' having a through-hole 4a' for the shaft 15. In this case, since the aperture portion of the slit hole 4a can be closed by applying the second punched metal 4', it is preferable that the dust is further more easily prevented from entering into the working area "A".

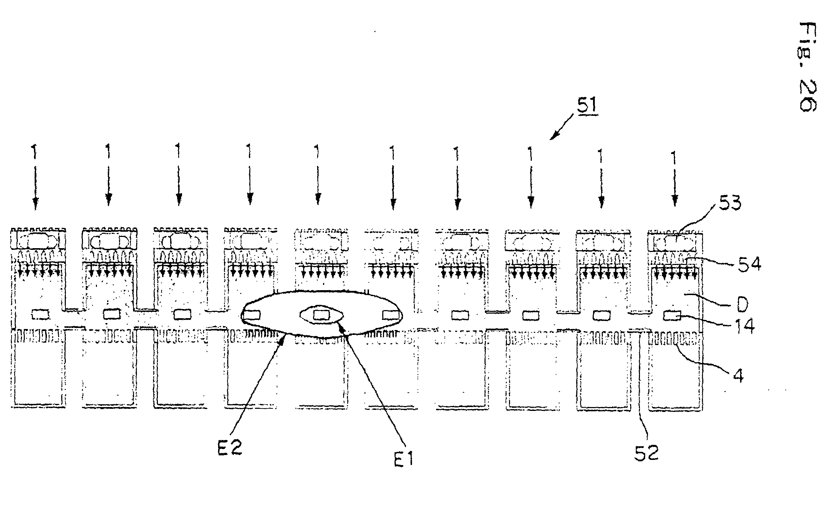

Next, a contamination prevention system in accordance with an embodiment of the present invention is shown in Figs. 26 through 38. The contamination propagation preventing system 51 of the present invention is applied as a system for preventing contamination propagation in a production system realizing a series of clean manufacturing processes by means of that a plurality of clean assembling module devices 1 (hereinafter, sometimes referred to as "module 1") performing prescribed manufacturing processes such as assembling or working on the work 14 are connected by a tubular connection passage 52 comprised of the above-mentioned flange part 8a, the tunnel 11 or the like to form the clean region "D". The contamination propagation preventing system 51 of the present embodiment is provided in the clean assembling module device 1 or the connection passage 52 with at least either of a contamination occurrence detecting means which detects contamination occurring in the clean region "D" in the inside of the system and a contamination occurrence prediction means which predicts the occurrence of contamination, a contamination propagation prediction means which predicts propagation of the contamination having occurred to other clean assembling module devices 1, and a contamination propagation preventing means which prevents propagation of the contamination having occurred to other clean assembling module devices 1.

An embodiment will be described in which the contamination propagation preventing system 51 in accordance with the present invention is applied to a production system which automatically carries the work 14, for example, by using the work carrier pallet 12 having four wheels and self-moving along the rails. The module 1 includes the clean air generating means 2 comprising of a fan 53 and a filter 54. Clean air passed through a filter 54 such as a HEPA filter (High Efficiency Particulate Air filter) is blown into the clean region "D" within the module 1 by the fan 53. The clean air passes the partition wall 4 (for example, comprising of a punched metal) having a plurality of small holes and flows downward. On the work carrier pallet 12 is detachably attached a work placing part, which is formed, for example, in a thin plate shape for placing the work 14 on it. Both the work carrier pallet 12 and the work placing part are provided with a rewritable memory function to be capable of updating information such as the work 14 at any time. Consequently, according to the contamination propagation preventing system 51 of the present embodiment, for example, the information is stored when it is judged that a contaminated work 14 is present, and the contamination possibility is stored on the work carrier pallet 12 or the work placing part based on the contents of the memory and it is carried to a position where it can be discharged.

The following are descriptions for the respective items of "Detection and Prediction", "Marking on Contaminated Work", "Determination of Contaminated Work", "Relief of Non-Contaminated Work", "Detection of Flow Rate Vector", "Prevention of Contamination Propagation" and "Recovery" about various considerations and embodiments relating to the contamination propagation preventing system 51.

1. Detection and Prediction

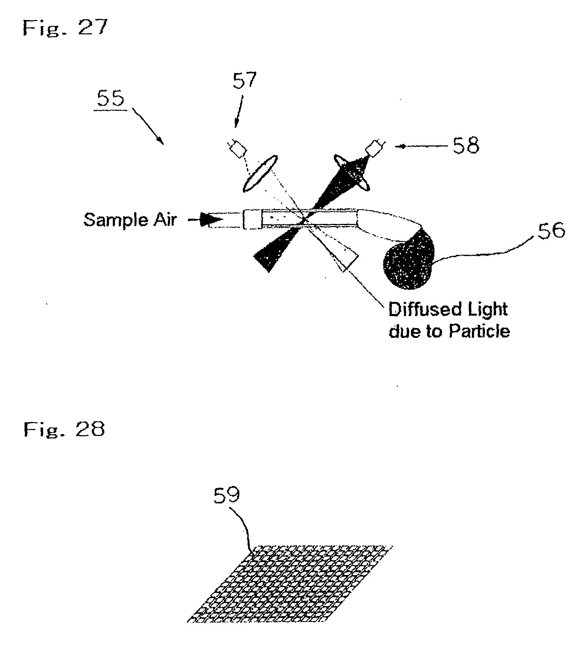

Various measuring means have been established for confirming the cleanliness in the clean region "D" such as a clean room in a conventional production system and can be used as a contamination occurrence detecting means. For example, the means which directly measures contaminating particles (particle) by using a particle counter 55 as shown in Fig. 27 irradiates a light beam from a photodiode 57 and a laser beam from a laser device 58 to a sample air sucked by a suction unit 56 and detects the diffused light due to particles to detect how it is contaminated. Further, a settling test has been also performed in which the brightness variation of respective pixels in a solid-state image pickup element 59 whose cover is removed for exposure as shown in Fig. 28 is measured and the particle settling is detected based on the number of the pixels whose brightness is lowered in a unit time. Except the direct measuring means described above, the measurement of the differential pressure between the clean region "D" and the non-clean region, the measurement of the flow rate and the flow rate vector of clean air or the like is performed as an indirect means. The indirect measurements do not measure the contamination itself. However, these are respectively one of major elements for the contamination factors and thus the contamination can be predicted in advance by detecting the abnormality of the controlled state of clean air. These respective means and methods can be used as a contamination occurrence prediction means, i.e., a means for predicting the occurrence of contamination based on the information of the flow rate and the flow direction of air within the connection passage 52. Further, these can be used as a contamination propagation prediction means, i.e., a means for predicting the propagation of contamination based on the information of the flow rate and the flow direction of air within the connection passage 52. The opening of the door 9 in a local clean region "D" within the module 1 and the execution of specified operations or the like for a specified process may be a factor that contamination occurs surely. Therefore, a door switch and a maintenance switch are important for contamination detection and prediction.

In the present embodiment, various detection methods are executed for the respective cases of "contamination", "damage", and "stoppage" (see the following Table 1). Table 1 also shows the factors of the respective cases of "contamination" "damage" and "stoppage", and the degrees of emergency (standards indicating how urgent to cope with the case having occurred) when the cases have occurred.

Table 1

| | Detection Method | Factor | Degree of Emergency |
|---|---|---|---|
| Contamination | Particle Counter<br><br>Settling Counting | Process Abnormality<br><br><br>Damage Stoppage | The work in the detection region has been already contaminated at the time of detection. |
| Damage | Differential Pressure, Flow Rate<br>Door Switch<br><br>Maintenance Switch | Open of Partition Wall<br><br>Defective Seal of Connecting Portion | Depend on circumstances.<br><br>The case of a door switch or the like is in an emergency.<br><br><br>The differential pressure sometimes does not affect for several minutes. |
| Stoppage | Fan Rotation Detection | Fan Service Life Over<br><br>Clogging of Filter | The clogging of filter does not affect for a few days.<br><br>Fan stoppage does not affect for several minutes. |

2. Marking on Contaminated Work

Next, when the work 14 is contaminated in the inside of each module 1 of the production system, how the contaminated work 14 is marked and how the contamination propagation is prevented will be described below (see Fig. 26). In the production system shown in Fig. 26, the work 14 is carried from the left side (upstream side) to the right side (downstream side) in the drawing and contamination has occurred in the fifth module 1 from the left side. The elliptical region shown by the notational symbol "E1" shows a region having been contaminated by the time of completion of an action and the elliptical region with the white space shown by the notational symbol "E2" shows a region that might be subjected to the contamination propagation by the time of completion of the action.

When it is decided by the above-mentioned detection or prediction that the contamination of the work 14 may occur, there is no meaning that a defective work is produced. Further as a more important matter, in order to avoid that contaminating particles are transferred to jigs and tools in the downstream process, it is preferable that a marking is performed on the work 14 which may be possibly contaminated and the work 14 is carried to a dischargeable place and discharged. For example, in the case of the present embodiment, since the memory function is provided on both the work carrier pallet 12 and the work placing part, the contamination possibility is stored on the work carrier pallet 12 or the work placing part. Therefore, the memorized state is read out through the processes going to the dischargeable place and an action is adapted to control so as not to touch the work 14. Further, the works 14 are discharged, which is present within the module 1 where the contamination is detected or predicted and which are present within a predetermined number of modules 1 and the connection passages 52 successively connected on the upstream side or the downstream side from the module 1 where the contamination is detected or predicted. While the work 14 is discharged and discarded at the place where the work 14 is dischargeable, the work placing part is preferably used again after having been cleaned. The memory stored as the contamination possibility "present" is rewritten to no contamination possibility when the discard is performed. Alternatively, the work 14 can be used again by being cleaned like the work placing part instead of discharging the work 14.

3. Determination of Contaminated Work

The works 14 within the module 1 and in the vicinity of the module 1 in which the contamination is predicted or detected are marked as the defective work as described above. The works 14 on the downstream side in the range where the contamination propagation is prevented can be continued to assemble. Further, production can be continued on the upstream side without waste by temporarily waiting until the normal producing and working are resumed. In the case of "stoppage" due to the abnormality of the fan 53, it takes a long time before the work is actually contaminated from the prediction has been performed, and thus the work 14 will not be contaminated just after the detection. In this case, the efficient production can be maintained by taking an action such as discontinuing the carrying of the work 14 into the concerned process after a certain specified time. How far contamination is propagated is determined to some extent by the construction for maintaining the degree of cleanliness, the propagation prevention method, and the detection prediction method in the production system, and their required times.

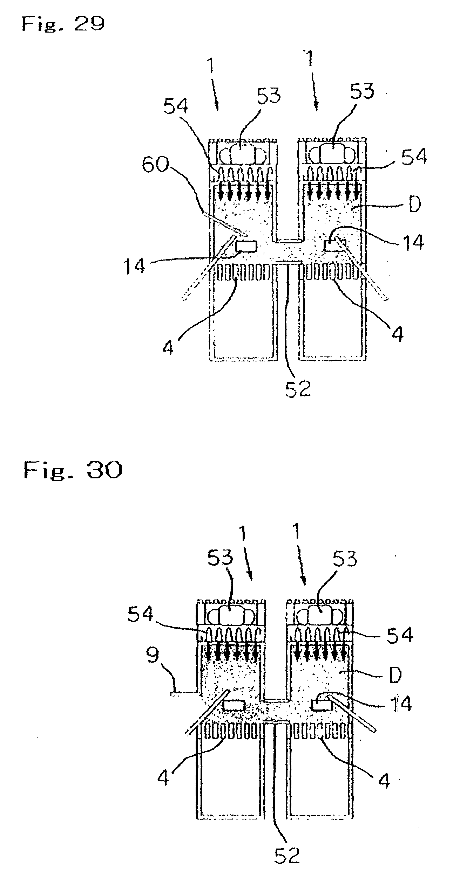

As the case of "contamination", the examination results for contamination are shown when the smoke of a cigarette is introduced into the clean region "D" with a straw 60 (see Fig. 29). Here, a breath with a period of five or six seconds after smoking is blown around the stop position of the work carrier pallet 12. In this case, about 2,300 contaminating particles with the diameter of about 0.3 Dm are detected. Further, the number of the particles within the module 1 decreases to 30 after 30 seconds from that time, and about 200 particles are detected in the neighboring module 1. As a result, it is confirmed that, although most of the smoke of the cigarette is exhausted downward from the partition wall 4 having small holes due to the down flow and its density becomes to be about 1/10, the propagation to the neighboring clean region "D" occurs. Actually, it is also confirmed that the correlation with the rail shape is large and, when the under face of the rail is formed in the grating shape, the amount of the propagation decreases remarkably. Also, the propagation due to the traveling of the work carrier pallet 12 is observed and the work carrier pallet 12 travels while involving the smoke particles, and thus a large quantity of particles are observed on the downstream side.

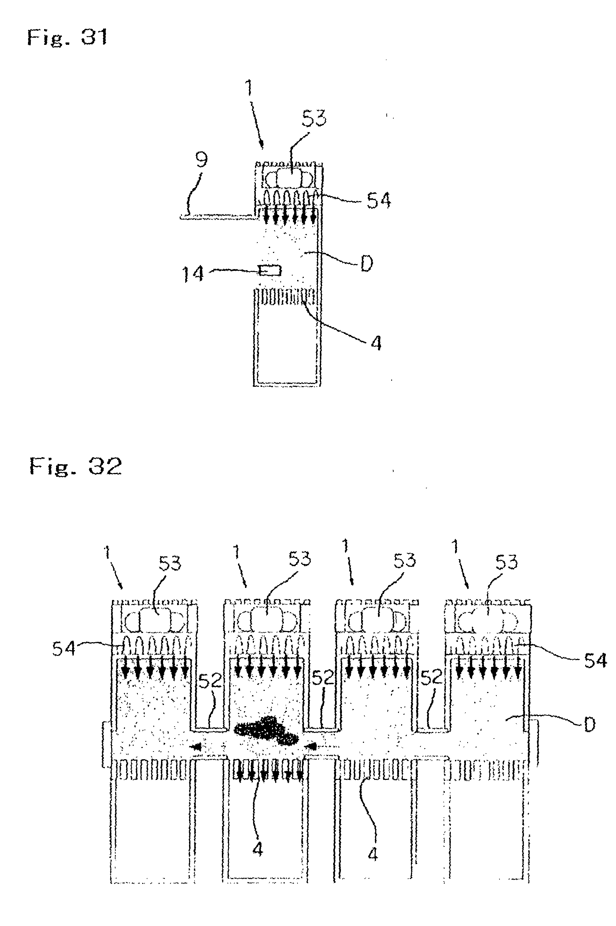

Moreover, the test results executed by assuming the case of "damage" will be described below (see Fig. 30). The test is performed by estimating the state in which the door 9 on one side of the connected modules 1 is opened. The state of contamination depends on the size and height of an aperture area. In this embodiment, as shown in Fig. 30, the aperture part of approximately 50×80 [mm] is provided in the side wall of the module 1 with the clean region of 170×230×200 [mm]. In this case, the deterioration of the cleanliness has not occurred at all. In addition, as shown in Fig. 31, when the aperture area is widened such that the front door 9 is completely opened, although the particles of more than 10,000 are observed on the aperture side, about 20 particles are observed in the neighboring module 1, which reveals almost no affection.

Other following conclusions are obtained through the experiments. In other words:

1. If the sealing (seal) in the clean region "D" ranging from the upper part filter 54 to the carrying face for the work 14 is complete (or if it is in the approximately equivalent state), the correlation between the differential pressure with respect to the outside air and the cleanliness is low.
2. The flow rate and the direction of the vector of clean air are very important and it is important that the flow in the negative direction with respect to the contamination environment is maintained.
3. The expansion speed itself of contamination is very slow and the magnitude of the flow rate vector is not necessary to be fast.

In the present embodiment, the "negative direction" means the direction flowing from the clean environment into the contaminated environment and, on the contrary, the positive direction means the direction flowing from the contaminated environment to the clean environment (see Fig. 32). The conclusion of the above-mentioned (3) is determined based on the fact that the count of the particles has begun after the lapse of time of 30 seconds or more after when the fan 53 on the opened side is stopped while the front door 9 is completely opened and then the fan 53 of the neighboring module 1 is also stopped.

As the conclusion discussed above, considering the assumption that an action can be taken within 10 seconds to the problem how far works 14 are contaminated based on the observation, the following expanding of the contamination can be assumed with respect to the respective detections and predictions.

① The case that the contamination is detected by a particle counter.

It should be decided that the work 14 within the detected module 1 is contaminated. According to the experiments, it can be decided that there is no possibility of contamination in the neighboring modules on both sides. However, the propagation can be almost surely decided by using the relationship with the flow rate vector described below.

② Prediction of contamination based on the reduction of the differential pressure.

Even if the reduction of the differential pressure is confirmed, the contamination does not occur by a short time. Therefore, if the time period of the process in the module 1 is, for example, not more than 30 seconds, the work can be regarded as a non-defective. However, it is very likely that the reduction of the differential pressure is occurred at the modules 1 connected to each other at the same time. Therefore, when only the reduction of the differential pressure is detected, it is difficult that the caused module 1 is specified and it is difficult that the recovery is performed within 30 seconds because a considerable time is required. Accordingly, it is undesirable to use only the detection of the differential pressure as a method of detection and prediction.

③ Prediction of contamination by using the flow rate and its direction.

When the flow rate and its direction can be measured even roughly, the expanding of contamination can be considerably accurately estimated. The reason is that, in the case of the production system using the work carrier pallet 12 as described in the present embodiment, the route where the contamination is propagated is only the connection passage 52 and the diffusion rate of the contaminating particles is very slow with respect to the wind velocity. In other words, when the traveling of the work carrier pallet 12 is not considered, the contamination is considered to travel only the air passing through the connection passage 52 as the medium and thus the detection of traveling the air in the connection passage 52 is very important with respect to the maintenance of the cleanliness. When the flow rate vector is detected in the discharge direction in the module 1 where the contamination is detected, it may be decided that the contamination is propagated.

4. Relief of Non-Contaminated Work

Although relating to the shutoff method for propagation described below, the work 14 having contamination possibility is basically treated as all works 14 having possibility to propagate the contamination are discharged as a defective and then discarded or they are charged after washed again. The production of the works 14 are continued, which are positioned in the processes on further downstream side than a prescribed number of modules 1 consecutively connected on the downstream side from the module 1 where the contamination is detected or predicted. The production of the works 14 is discontinued, which are within the module 1 where the contamination is detected or predicted and within prescribed modules consecutively connected on the upstream side from the module 1 where the contamination is detected or predicted. In other words, as for the works determined that there is no possibility of propagation, normal producing operations are continued within the range that there is no possibility of contamination. Further, in the upstream processes of the concerned process (process having possibility of contamination: including the case of a plurality of processes), the production is continued to the concerned process and the production and carrying are discontinued in the process just before the concerned process. On the downstream side, the charge is not performed from the concerned process, and the operation is automatically stopped under the condition waiting for the charge in the respective consecutive processes and stands by under the state after the work 14 has been carried out. According to the control described above, the works 14 without possibility of contamination can be controlled not to be discarded.

When the rails are linked complicatedly, the carrying of the work 14 with the work carrier pallet 12 can not be often considered simply as being on the upstream or downstream side. When combined with the tray feeding, since assembly is sometimes executed while the work 14 is shifted, the situation becomes to be further more complicated. However, the upstream and downstream sides are basically decided based on the process drawing, not on the device order.

5. Detection of Flow Rate Vector

As described above, the detection of the flow rate is an effective means for estimating the contamination propagation. In the production system in which the modules 1 with the locally formed clean area "D" are connected to each other like the present embodiment, the detection of the reduction of the differential pressure does not immediately result the contamination by a short time as described above. Further, even if the opening of the door 9 can be detected, it is difficult to specify which door 9 of the modules 1 is opened. Therefore, it is considered that the detection of the differential pressure often used in conventional clean rooms is unsuitable and the detection of the flow rate vector is an effective means. When the flow rate of the connection passage 52 is detected, other important matters concerning the cleanliness management can be grasped as well as the estimate of the contamination propagation.

① In the case that all detected vectors are in the negative direction in the connection passage 52.

When the flow rate vector in the connection passage 52 connected to a module 1 varies largely in the negative direction, it can be decided that it is directly connected to the outside air. The meaning of "direct connection" here includes, for example, that the door 9 for maintenance is opened. When such a decision is performed, the possibility that contamination has occurred is very high, and the entire clean region "D" of the module 1 can be confirmed with the means which can only perform to some extent a local measurement like a particle monitor. In addition, similar conditions may occur due to the stopping of the fan 53. However, the variation speed of the flow rate vector is slow in comparison with the opening of the door 9. A dedicated detector is preferable for the detection of the stopping of the fan 53 because much cost is not required, but the detection can be also performed by the vector variation detection.

② In the case that all detected vectors are in the positive direction in the connection passage 52.

It can be monitored that the shutdown operation of propagation described below is surely performed.

③ In the case that vectors in the negative and positive directions are detected in the connection passage 52.

The contamination may be propagated from the connection passage 52 in the negative direction. Therefore, the decision state of the module 1 connected to the connection passage 52 is confirmed and the presence of contamination should be decided. In this case, the propagation of contamination is considered to be proportional to the magnitude of the flow rate vector.

The monitoring of the flow rate vector in the connection passage 52 separately from the monitoring of the contamination exhibits power in the design of cleanliness, in other words, an individual air management for the module 1 having occurred contamination many times or in which contamination is concerned about and for the process which contamination should be avoided. In the production system of the present embodiment, the unit of cleanliness management is easily assigned to the module 1 (since the fan 53 and the exhaust fan 5 are provided in each module unit, the differential pressure and the flow rate can be independently managed). However, even when the air management of individual modules 1 is performed, all the differential pressures become the same under the condition connected by the connection passages 52 and thus the direction of the contaminating particles cannot be grasped. As described above, since the contaminating particles propagate and move in the connection passage 52, the contamination propagation can be set in advance as required.

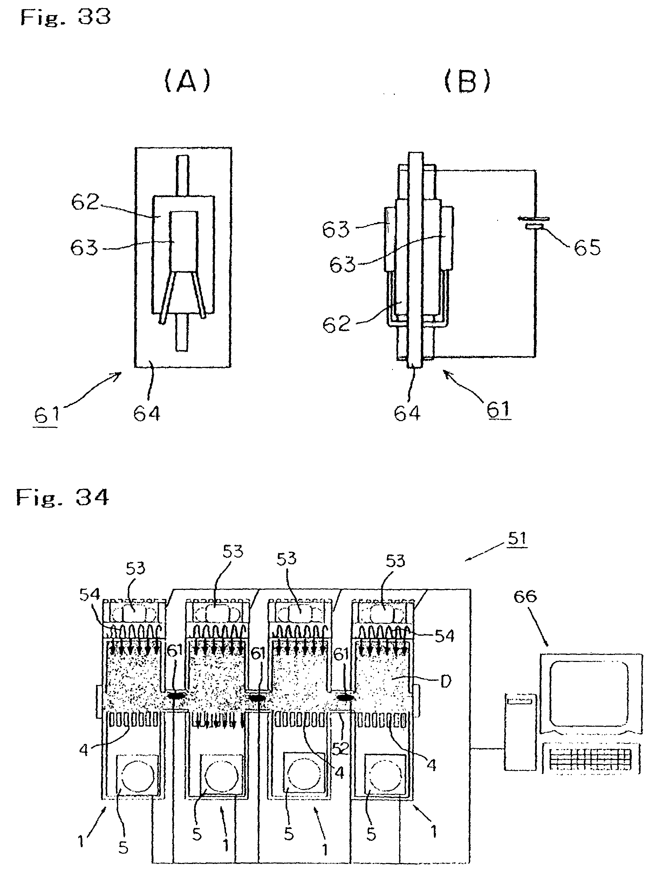

As a sensor which detects the flow rate vector in the connection passage 52, a temperature sensor 61 can be used, for example, which comprises a resistance heating element 62, a thermistor 63, an insulating circuit board 64, a DC power supply 65 and the like as shown in Fig. 33.

6. Prevention of Contamination Propagation

In the present embodiment, a contamination propagation preventing means is provided for preventing contamination from propagating to the clean module 1 when the contamination has occurred. The contamination propagation preventing means comprises, for example, a means for controlling the clean air generating means, which is installed in the module 1 connected to the connection passage 52, based on the information of the flow rate and the flow direction of air in the module 1 where the contamination is detected or predicted and in the connection passage 52 connected to the module 1. However, the present invention is not limited to the embodiment. For example, the contamination propagation preventing means can be realized by using the following methods a) through d).

① Mechanical shutdown of the connection passage 52

a) Installation of a mechanical shutter

Mechanical shutdown requires a mechanical movable part, which may be a contamination source in itself and there is a problem to be solved for immediate prevention of propagation, but it is an effective method when shutdown with a long time period is performed.

b) Shutdown by expanding balloon-shaped object

A shutdown method of expanding a balloon-shaped object can prevent occurrence of contamination by the movable part but actually an air pressure source is required to expand.

② Shutdown by flow control of air

c) Control for generating flow rate vector toward upstream side of contamination propagation

It is apparent from the above-mentioned embodiment that the control of the flow rate vector is the most effective for immediate shutdown. In this case, the fan 53 of the module 1 assumed as the contaminated source is simply stopped or the rotational speed of the exhaust fan 5 as the exhaust means is increased (both methods may be performed). When urgently performed! manually, it can be realized that the door 9 at the contaminated source is simply opened with a specified quantity. Further, as shown in Fig. 34, when a monitor system 66 comprising a computer connected to the fans 53, the exhaust fans 5 of the respective modules 1 and flow rate sensors (temperature sensors) 61 is used, information about how long does it take to obtain the flow rate vector for shutdown after contamination has occurred can be acquired and registered.

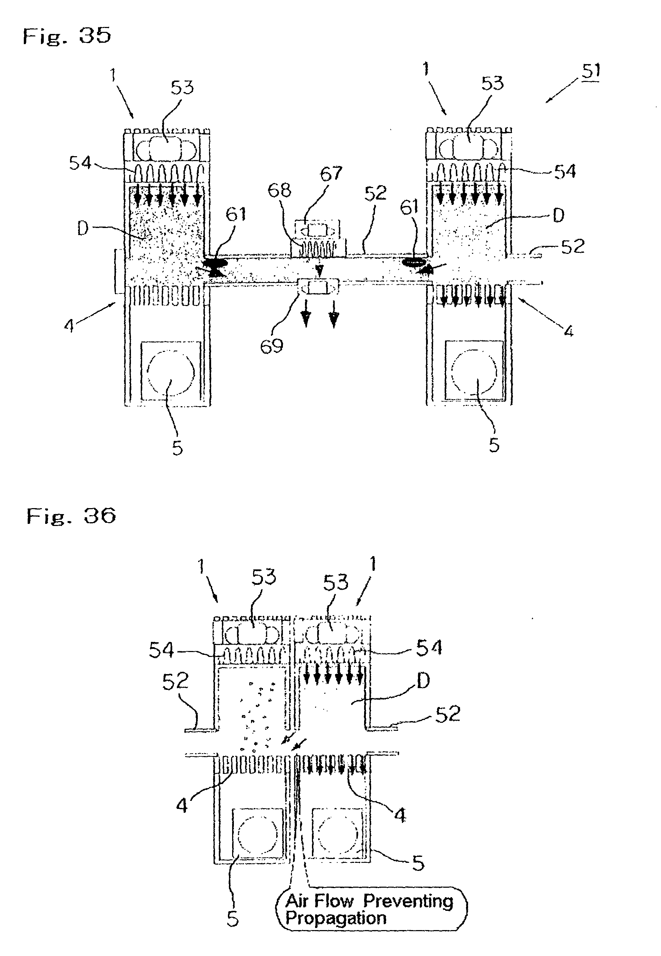

d) Control generating airflow in the orthogonal direction to contamination propagation (see Fig. 35)

The method of the d), which generates the airflow in the orthogonal direction in the connection passage 52, can be used as a method for controlling the airflow at the time of contamination detection and prediction. However, different from the method of the c), there is no problem even if the air is flown while the air is controlled, and the condition that the propagation of contamination is always intercepted can be realized. The condition that the propagation of contamination is always intercepted can be realized by the airflow in the orthogonal direction. The fan 67 and the filter 68 are installed when the pressure in the connection passage 52 cannot be maintained at a positive pressure. In addition, when the flowing-in or flowing-out of air between two modules 1 is intercepted, the exhaust fan 69 is installed in the connection passage 52.

7. Recovery

In addition, the contamination propagation preventing system 51 includes a cleanliness recovery means for recovering the cleanliness of the module 1 or the connection passage 52 where the contamination is detected or predicted. The cleanliness recovery means includes, for example, a clean air generating means 2 (fan 53 and filter 54) and an exhaust means (exhaust fan 5). The propagation of contamination is prevented by reducing the flow quantity of clean air from the clean air generating means 2 which is installed in the module 1 connected to the connection passage 52 based on the information of the flow rate and the flow direction of air in the module 1 where contamination is detected or predicted and the connection passage 52 connected to the module 1. The recovery of cleanliness is performed by gradually increasing the flow quantity of the reduced clean air from the clean air generating means 2 till the flow quantity required to ensure the cleanliness of the clean region "D".

After the prediction or detection of contamination, the prediction of propagation, and the shutdown of propagation are executed, it is preferable to perform the decision of contamination source and the countermeasures therefor. After the completion of the decision and the countermeasures, the cleanliness of the contaminated module 1 is performed and a releasing means for the propagation shutdown is performed. After the cause is removed, wiping cleaning is performed and then the internal clean region "D" is shut off and cleaned. The cleanliness in a single module 1 can be performed by 20-30 seconds after the operation of the fan 53 is started because the internal clean region "D" is small. In the case that the propagation to the connected modules 1 is shut off by inflow from the connection passage 52 due to the stoppage of the fan 53 in the contamination module 1 as the shutdown measures for the contamination propagation, when the fan 53 is operated to recover the cleanliness of the contaminated module 1, dust may be propagated to the neighboring module 1, i.e., the module 1 without contaminated.

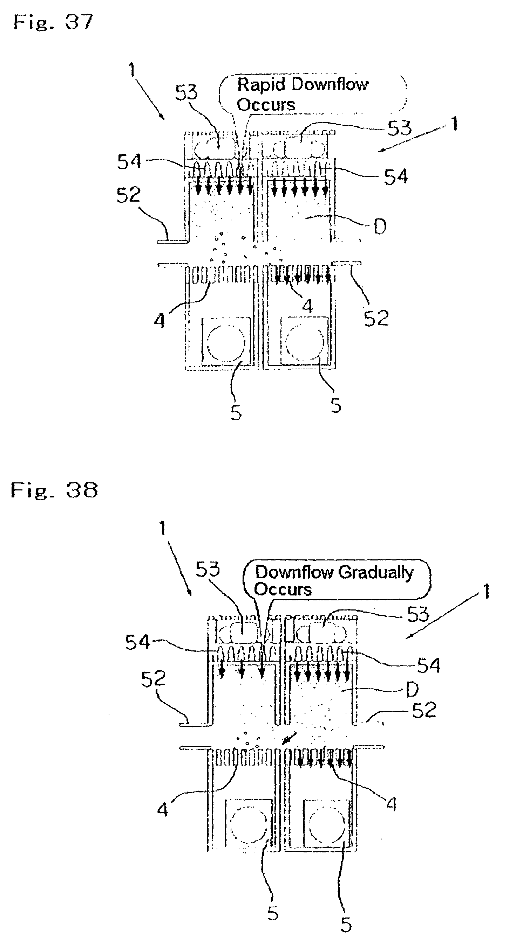

In other words, in the shutdown condition shown in Fig. 36, air flowing from the non-contaminated module 1 to the contaminated module 1 can prevent from contamination propagation. However, when the fan 53 is suddenly rotated in the contaminated module 1, a rapid down flow occurs as shown in Fig. 37 and the contamination may flow into the non-contaminated module 1 before the contamination has not been eliminated. For the problem described above, the recovery of the contaminated module 1 is performed without propagating the contamination to the connected modules 1 by executing the following two-step control to the fan 53 (see Fig. 38).

① The rotational speed of the fan 53 is gradually increased to a set value over a time period of about 25 seconds.
② Wait at the set value for 10 seconds.

Although the contamination has been almost recovered at the step of ①, the wait in the step ② is performed till the requirements for the cleanliness become stable (air flow becomes a normal condition). When the time period of ① is too short, the contamination propagation to surroundings occurs. However, when the time period of ① is too long, it only requires much time to recover. Therefore, when the productivity is not much required, it is preferable to set up slowly by taking much time as long as possible.

8. Conclusions

The controls described above are summarized as follows:

Detection of contamination occurrence

↓

Propagation assumption

↓

Propagation shutdown

↓

Countermeasures handling

↓

Recovery

The following are used as the detection system and the operation system.

<Detection System>

The rotation detection device of the fan 53
The rotation detection device of the exhaust fan 5
The door switch
The maintenance switch
The flow rate detection device directly under the fan 53
The flow rate direction detection device in the connection passage 52 (temperature sensor (flow rate sensor) 61)

<Operation System>

The drive control device for the fan 53
The drive control device for the exhaust fan 5
The shutdown mechanism for the connection passage 52

In order to organize the cleanliness management at the time of set up at an early stage separately from the countermeasures for contamination propagation, as shown in Fig. 34, the differential pressure, the flow rate and the direction are displayed on the screen of the monitor system 66 and it can be confirmed that an enough down flow condition is organized in each module 1 and confirms the flow rate and the flow direction in the connection passage 52 depending on the demanded cleanliness and the contamination occurrence in the process, which results in that the motions of the respective fans 53 can be determined based on the information. Further, a plurality of control state types are registered in the computer of the monitor system 25 and they can be changed in accordance with the operational conditions. In the case as described above, the level of cleanliness management can be controlled in accordance with the volume of production and is useful for power saving at the time of a night stoppage.

As described above, the contamination propagation preventing system 51 in accordance with the present embodiment enables the following:

• The expanding of contamination in the entire production system can be restrained by executing the detection and prediction of contamination and shutting off the propagation of contamination.

- The detection of contamination is used to effectively decide a contamination module 1 by using together with the detection of the flow rate vector in the connection passage 52.
- The detection of stoppage of the fan 53 and the open state of the door 9 enables the probability of the detection and prediction to increase by using together with the detection of the flow rate vector in the connection passage 52, which leads to take appropriate actions corresponding to the circumstances.
- The detection of the flow rate vector in the connection passage 52 is a major matter in the production system (especially in the small-sized system as utilizing the work carrier pallet 12) and effective information can be provided for setting the speed of the fan 53 or the like for cleanliness construction as well as contamination propagation.
- For the prevention of contamination propagation, mechanical method and airflow control are effective.
- The propagation by the airflow control can be prevented at a low cost for an emergent propagation shutdown. In this case, since especially it can be realized without addition of hardware, It is profitable to reduce its cost. Further, the countermeasure of dust generating for the mechanism itself is required in a mechanical method but, in the case of airflow control, only the movement of particles due to air current variation is required to be considered.
- When the contaminated module 1 is cleaned again, it is important not to generate propagation that the operation of the fan 53 is not rapidly set up but gradually.
- For contamination propagation management and cleanliness construction, it is important that shutdown mechanisms such as respective detection systems and fan control are connected to a computer and totally controlled by a network such as the monitor system 66 and the like.

The embodiment described above is a preferred example of the present invention. However, the present invention is not limited to the embodiment and many modifications can be made without departing from the subject matter of the present invention. For example, the contamination occurrence prediction means in the present embodiment is the means that predicts the occurrence of contamination based on the information of the flow rate and the flow direction of air within the connection passage. However, the contamination occurrence can be predicted by other factors, for example, by the detection that the door partitioning between the clean region "D" in the production system and outside air is opened, or by the detection that an operator explicitly pushes a button as a meaning to declare that maintenance is going to be executed.

While the foregoing description and drawings represent the present invention, it will be obvious to those skilled in the art that various changes may be made therein without departing from the true spirit and scope of the present invention.

**Claims**

**1.** A clean assembling module device for performing an operation with respect to a work comprising:

a clean air generating means being at an upper part of the device and being constructed so as to include from an upper part side of said device a working area, a clean air retaining and exhausting area, and a mechanism section area;
an outer periphery of said working area being covered with a clean region shielding wall;
flow-resistance of the working area and the clean air retaining and exhausting area being controlled by a partition wall having a plurality of small holes;
said mechanism section area being provided with an exhaust fan to exhaust the air flowing through the working area and the clean air retaining and exhausting area to an outside of the device;
said working area being controlled at a positive pressure by the clean air generating means;
said mechanism section area being depressurized with respect to the working area; and
a pressure of the clean air retaining and exhausting area being adjusted by means of the small holes of the partition wall and a rotational speed of the exhaust fan so as to be a middle pressure between a pressure in the working area and a pressure in the mechanism section area.

**2.** The clean assembling module device according to claim 1, wherein a working mechanism for performing an operation such as assembling, working, carrying or the like of the work is installed in the working area.

**3.** The clean assembling module device according to claim 2, wherein the working mechanism is a mechanism in which one part of the mechanism penetrates through the clean air retaining and exhausting area and enters into the mechanism section area.

**4.** The clean assembling module device according to claim 1, further comprising a carrier means for carrying in and carrying out the work which penetrates through the clean region shielding wall, wherein the working area is provided with a penetration part through which the carrier means penetrates for allowing connection with the outside.

5. The clean assembling module device according to claim 4, wherein the penetration parts are disposed at two or more positions, two of the penetration parts are installed such that the work is carried within the clean assembling module device in a linear manner.

6. The clean assembling module device according to claim 1, wherein the working area includes a door for maintenance and the door is constructed such that a plurality of aperture areas can be selected corresponding to contents of maintenance.

7. A production system comprising a plurality of clean assembling module devices according to claim 4, wherein the clean assembling module device is connected to another clean assembling module device by connecting the penetration parts such that work can be carried in or carried out by a carrier means, and the connection is performed by a U-shaped seal member which is fitted to the flange parts of the penetration parts to form a seal between the penetration parts.

8. The production system according to claim 7, wherein a gel-like sealing material is coated between the U-shaped seal member and the flange part of the penetration part.

9. The production system according to claim 7, wherein a fitting condition of the U-shaped seal member is such that an open part of a U-shape faces in a downward direction.

10. A production system comprises a plurality of clean assembling module devices according to claim 4, wherein the clean assembling module device is connected to another clean assembling module device by connecting the penetration parts and a tunnel accommodating the carrier means such that work can be carried in or carried out by a carrier means, and the connection is performed by a U-shaped seal member which is fitted to the flange parts of the penetration parts and the tunnel to seal between the penetration parts and the tunnel.

11. The production system according to claim 10, wherein a gel-like sealing material is coated between the U-shaped seal member and the flange part of the penetration part and the tunnel.

12. The production system according to claim 10, wherein a fitting condition of the U-shaped seal member is such that an open part of a U-shape faces in a downward direction.

13. An industrial robot having a horizontal sliding mechanism, an upper and lower lifting mechanism and an arm turning mechanism for performing assembling, working or the like on a work, comprising that:

said upper and lower lifting mechanism includes a shaft, a shaft guide part supporting the shaft, and an upper and lower lifting drive device which makes the shaft go up and down;
said arm turning mechanism including a turning arm and a turning drive device for turning the turning arm;
said turning arm being disposed on an upper side of the shaft guide part; and
said horizontal sliding mechanism and said upper and lower lifting drive device being disposed on a lower side of the shaft guide part to keep the weight balance to the shaft guide part.

14. The industrial robot according to claim 13, further comprising a partition wall, which is provided at an upper position of the turning drive device and the shaft guide part and at a lower position of the turning arm, for maintaining a work environment for assembling, working or the like on the work.

15. The industrial robot according to claim 14, wherein the partition wall includes a first partition wall having a slit hole allowing the industrial robot to slide in a horizontal direction and a second partition wall having a through-hole for the shaft.

16. The industrial robot according to claim 13, further comprising a rotation shaft provided at an arm end of the turning arm for rotating the work or performing a rotational operation for the work.

17. The industrial robot according to claim 13, wherein the turning arm comprises a plurality of arms.

**18.** The industrial robot according to claim 13, wherein a mounting face for mounting the industrial robot is provided in a parallel direction to an axial direction of the shaft.

**19.** A contamination propagation preventing system in a production system in which a plurality of clean assembling module devices for performing prescribed manufacturing processes such as assembling, working and the like on a work are connected with a tubular connection passage to form a clean region and realize a series of clean manufacturing processes, comprising:

at least either one of a contamination occurrence detecting means for detecting contamination occurred in the clean region of an inside of the system and a contamination occurrence prediction means for predicting the occurrence of contamination, and a contamination propagation prediction means for predicting the propagation of the contamination having occurred to another clean assembling module device, and a contamination propagation preventing means for preventing the propagation of the contamination having occurred to another clean assembling module device are provided in the clean assembling module device or the connection passage.

**20.** The contamination propagation preventing system according to claim 19, wherein the contamination occurrence prediction means is a means for predicting an occurrence of contamination based on information of a flow rate and a flow direction of air within the connection passage.

**21.** The contamination propagation preventing system according to claim 19, wherein the contamination propagation prediction means is a means for predicting a propagation of contamination based on information of a flow rate and a flow direction of air within the connection passage.

**22.** The contamination propagation preventing system according to claim 19, wherein the contamination propagation preventing means is a means for controlling a clean air generating means, which is installed in the clean assembling module device connected to the connection passage, based on information of a flow rate and a flow direction of air within the clean assembling module device where contamination is detected or predicted and the connection passage connected to the clean assembling module device.

**23.** The contamination propagation preventing system according to claim 19, wherein defective works which are present within the clean assembling module device where contamination is detected or predicted and within a predetermined number of clean assembling module devices and connection passages which are successively connected to the clean assembling module device on an upstream side or a downstream side are discharged or re-cleaned.

**24.** The contamination propagation preventing system according to claim 19, wherein production of works, which are present in processes further downstream side from a predetermined number of clean assembling module devices successively connected on a downstream side of the clean assembling module device where contamination is detected or predicted, is continued and production of works, which are present within the clean assembling module device where the contamination is detected or predicted and prescribed clean assembling module devices successively connected on an upstream side of the concerned clean assembling module device, is discontinued.

**25.** The contamination propagation preventing system according to claim 19, further comprising a cleanliness recovery means for recovering a cleanliness in the clean assembling module device where contamination is detected or predicted or in the connection passage.

**26.** The contamination propagation preventing system according to claim 25, wherein the cleanliness recovery means includes a clean air generating means and an exhaust means for exhausting from the clean assembling module device, prevention of contamination propagation being performed by reducing a flow quantity of clean air from the clean air generating means, which is installed in the clean assembling module device connected to the connection passage, based on information of a flow rate and a flow direction of air in the clean assembling module device where contamination is detected or predicted and the connection passage connected to the concerned clean assembling module device, and recovery of cleanliness is performed by gradually increasing a flow quantity of reduced clean air from the clean air generating means to a flow quantity which is required to ensure the cleanliness of the clean region.

## Fig. 1

# Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

55

57

58

Sample Air →

56

Diffused Light
due to Particle

Fig. 28

59

Fig. 29

Fig. 30

Fig. 31

Fig. 32

Fig. 33

(A)

(B)

Fig. 34

Fig. 35

Fig. 36

Air Flow Preventing Propagation

Fig. 37

Rapid Downflow
Occurs

Fig. 38

Downflow Gradually
Occurs

Fig. 39

Fig. 40

## Fig. 41

## Fig. 42

Fig. 43

## INTERNATIONAL SEARCH REPORT

| | International application No. |
|---|---|
| | PCT/JP03/06734 |

| A. CLASSIFICATION OF SUBJECT MATTER |
|---|
| Int.Cl$^7$  F24F7/06, B25J9/06 |

According to International Patent Classification (IPC) or to both national classification and IPC

| B. FIELDS SEARCHED |
|---|
| Minimum documentation searched (classification system followed by classification symbols) |
| Int.Cl$^7$  F24F7/04-7/06, B25J9/06 |

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 2000-85963 A  (Shin Maywa Industries, Ltd.), 28 March, 2000 (28.03.00), Page 4, left column, lines 23 to 42; page 4, right column, lines 10 to 36; page 5, left column, line 41 to right column, line 7 (Family: none) | 1-5,19,23-25 |
| Y | JP 2001-284248 A  (Dainippon Screen Mfg. Co., Ltd.), 12 October, 2001 (12.10.01), Fig. 1 (Family: none) | 1-5 |

| ☒ Further documents are listed in the continuation of Box C. | ☐ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 August, 2003 (25.08.03) | 09 September, 2003 (09.09.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| International application No. |
|---|
| PCT/JP03/06734 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-165281 A (Mitsubishi Heavy Industries, Ltd.),<br>22 June, 1999 (22.06.99),<br>Fig. 1<br>(Family: none) | 13,16-18 |
| Y | JP 6-278062 A (Yamaha Motor Co., Ltd.),<br>04 October, 1994 (04.10.94),<br>Figs. 1 to 2<br>(Family: none) | 13,16-18 |
| Y | JP 2001-274218 A (Sankyo Seiki Mfg. Co., Ltd.),<br>05 October, 2001 (05.10.01),<br>Fig. 1<br>(Family: none) | 17 |

Form PCT/ISA/210 (continuation of second sheet) (July 1998)

## INTERNATIONAL SEARCH REPORT

| International application No. |
| --- |
| PCT/JP03/06734 |

**Box I   Observations where certain claims were found unsearchable (Continuation of item 2 of first sheet)**

This international search report has not been established in respect of certain claims under Article 17(2)(a) for the following reasons:

1. ☐ Claims Nos.:

  because they relate to subject matter not required to be searched by this Authority, namely:

2. ☐ Claims Nos.:

  because they relate to parts of the international application that do not comply with the prescribed requirements to such an extent that no meaningful international search can be carried out, specifically:

3. ☐ Claims Nos.:

  because they are dependent claims and are not drafted in accordance with the second and third sentences of Rule 6.4(a).

**Box II   Observations where unity of invention is lacking (Continuation of item 3 of first sheet)**

This International Searching Authority found multiple inventions in this international application, as follows:

```
The international application includes the following three inventions:
1. The invention in Claims 1-12, where the invention relates to a clean assembling
module device.
2. The invention in Claims 13-18, where the invention relates to an industrial
robot.
3. The invention in Claims 19-26, where the invention relates to a pollution
spread prevention device.
```

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐   The additional search fees were accompanied by the applicant's protest.

☐   No protest accompanied the payment of additional search fees.

Form PCT/ISA/210 (continuation of first sheet (1)) (July 1998)